# EUROPEAN PATENT APPLICATION

(11) **EP 4 645 053 A1**
(43) Date of publication of application: **05.11.2025**
(21) Application number: 24844503.3
(22) Date of filing: 25.06.2024
(51) Int. Cl.: G06F 3/0488

(54) **INTERACTION METHOD AND ELECTRONIC DEVICE**

(30) Priority: 21.07.2023 CN 202310904535
(71) Applicant: Huawei Technologies Co., Ltd., Shenzhen, Guangdong 518129 (CN)
(72) Inventor: WEI, Haolin, Shenzhen, Guangdong 518129 (CN); WANG, Zongbo, Shenzhen, Guangdong 518129 (CN); ZHENG, Jiangzhen, Shenzhen, Guangdong 518129 (CN); JIANG, Shunji, Shenzhen, Guangdong 518129 (CN)
(74) Representative: MERH-IP Matias Erny Reichl Hoffmann Patentanwälte PartG mbB
(86) International application number: PCT/CN2024/101244
(87) International publication number: WO 2025/020809

(57) **Abstract**

This application provides an interaction method and an electronic device. The method is applied to the electronic device. The electronic device includes a virtual button, and the virtual button is used to detect a pressing operation of a user. The electronic device displays a first interface. The method includes: detecting a first pressing operation performed by the user on the virtual button, and determining first pressing force and first pressing duration; determining a first function based on the first interface, the first pressing force, and the first pressing duration; and performing the first function in response to the first pressing operation. The electronic device in this application has the virtual button, and may perform a corresponding function based on a displayed interface, force of pressing the virtual button by the user, and duration of pressing the virtual button. This improves operation efficiency of the user, enhances interaction, and helps improve user experience.

## Description

This application claims priority to Chinese Patent Application No. 202310904535.0, filed with the China National Intellectual Property Administration on July 21, 2023 and entitled "INTERACTION METHOD AND ELECTRONIC DEVICE", which is incorporated herein by reference in its entirety.

### TECHNICAL FIELD

Embodiments of this application relate to the field of electronic devices, and more specifically, to an interaction method and an electronic device.

### BACKGROUND

With continuous progress of technologies, a user has increasingly high requirements on an electronic device. To obtain a lighter and thinner body and better sealing performance, the electronic device tends to reduce internal structural parts, and develops toward an integrated body. For example, a 3.5 mm headset jack originally configured on the electronic device may be replaced with a Bluetooth headset, or share a port with a charging port. Currently, some electronic devices use virtual buttons to replace physical buttons (also referred to as physical buttons), to improve body integration. However, currently, an interaction manner and an application scenario of a virtual button are single, and a function of the virtual button is not fully utilized.

### SUMMARY

This application provides an interaction method and an electronic device. The electronic device has a virtual button, and may perform a corresponding function based on a displayed interface, force of pressing the virtual button by a user, and duration of pressing the virtual button. This improves operation efficiency of the user, enhances interaction, and helps improve user experience.

According to a first aspect, an interaction method is provided. The method is applied to an electronic device. The electronic device includes a virtual button, and the virtual button is used to detect a pressing operation of a user. The electronic device displays a first interface. The method includes: detecting a first pressing operation performed by the user on the virtual button, and determining first pressing force and first pressing duration; determining a first function based on the first interface, the first pressing force, and the first pressing duration; and performing the first function in response to the first pressing operation.

In this embodiment of this application, the electronic device has the virtual button, and may perform a corresponding function based on the displayed interface, the force of pressing the virtual button by the user, and the duration of pressing the virtual button. This improves operation efficiency of the user, enhances interaction, and helps improve user experience.

With reference to the first aspect, in some implementations of the first aspect, the first interface is a home screen interface, and when the first pressing force is less than a first threshold, and the first pressing duration is greater than or equal to a second threshold, the first function is a system volume adjustment function.

In this embodiment of this application, the electronic device may display a parameter adjustment bar based on the force and the time of pressing the virtual button by the user, so that the user can perform an operation conveniently.

With reference to the first aspect, in some implementations of the first aspect, the virtual button is further used to detect a slide gesture of the user, and the method further includes: switching from the first function to a second function in response to a first slide gesture of the user on the virtual button. A direction of the first slide gesture is a thickness direction of the electronic device. The second function is one of a brightness adjustment function, a microphone volume adjustment function, a speaker volume adjustment function, a message alert tone volume adjustment function, a screen display mode adjustment function, and an incoming call ringing volume adjustment function.

In this embodiment of this application, the electronic device may display the parameter adjustment bar based on the force and the time of pressing the virtual button by the user, so that the user can perform an operation conveniently. In addition, a gesture of switching the parameter bar is simple, which conforms to a daily use habit, and can improve user experience.

With reference to the first aspect, in some implementations of the first aspect, the virtual button is further used to detect a slide gesture of the user, and the method further includes: adjusting a system volume in response to a second slide gesture of the user on the virtual button. A direction of the second slide gesture is a length direction of the electronic device.

In this embodiment of this application, the electronic device may display the parameter adjustment bar based on the force and the time of pressing the virtual button by the user, so that the user can perform an operation conveniently. In addition, a gesture of switching the parameter bar is simple, which conforms to a daily use habit, and can improve user experience.

With reference to the first aspect, in some implementations of the first aspect, the first interface is a home screen interface, and when the first pressing force is greater than or equal to a first threshold, and the first pressing duration is greater than or equal to a second threshold, the first function is a voice assistant function.

In this embodiment of this application, the electronic device may enable a voice assistant based on the force and the time of pressing the virtual button by the user, so that the user can perform an operation conveniently, and user experience can be improved.

With reference to the first aspect, in some implementations of the first aspect, the first interface is a photographing interface, and when the first pressing force is greater than or equal to a first threshold and less than or equal to a third threshold, the first function is an automatic focus function.

With reference to the first aspect, in some implementations of the first aspect, the method further includes: detecting a second pressing operation performed by the user on the virtual button, and determining second pressing force and second pressing duration; and when the second pressing force is less than the first threshold and the second pressing duration is greater than or equal to a second threshold, displaying a focus frame in response to the second pressing operation, where the focus frame is used to identify a first object.

With reference to the first aspect, in some implementations of the first aspect, the virtual button is further used to detect a slide gesture of the user, and the method further includes: switching the first object in the focus frame to a second object in response to a second slide gesture of the user on the virtual button, where a direction of the second slide gesture is a length direction of the electronic device.

With reference to the first aspect, in some implementations of the first aspect, the method further includes: locking the focus frame and the first object in response to a continuous pressing operation performed by the user on the virtual button, where pressing force of the continuous pressing operation is less than the first threshold.

With reference to the first aspect, in some implementations of the first aspect, when the first pressing force is first greater than the third threshold and then less than the first threshold, the first function is a photographing function.

With reference to the first aspect, in some implementations of the first aspect, when the first pressing force is greater than the third threshold and the first pressing duration is greater than the second threshold, the first function is a video recording function.

With reference to the first aspect, in some implementations of the first aspect, when the first pressing force is less than the first threshold and the first pressing duration is greater than the second threshold, the first function is displaying a viewfinder frame.

With reference to the first aspect, in some implementations of the first aspect, the virtual button is further used to detect the slide gesture of the user, and the method further includes: displaying an adjustment bar for a first parameter in response to a parameter adjustment operation of the user; and in response to the slide gesture of the user on the virtual button, if a direction of the slide gesture is a thickness direction of the electronic device, switching the adjustment bar for the first parameter to an adjustment bar for a second parameter, or if a direction of the slide gesture is the length direction of the electronic device, adjusting the first parameter.

In this embodiment of this application, when running a camera application, the electronic device may adjust a photographing parameter and switch the parameter adjustment bar based on the sliding direction of the user on the virtual button, so that the user can perform an operation conveniently. In addition, gestures of switching the parameter bar and adjusting the parameter are simple, which conforms to a daily use habit and can improve user experience.

With reference to the first aspect, in some implementations of the first aspect, the method further includes: detecting that at least two of four edge areas of a screen are touched, further detecting a third pressing operation performed by the user on the virtual button, and determining third pressing force and third pressing duration of the third pressing operation; and when the third pressing force is greater than or equal to the first threshold and less than or equal to a third threshold, starting a camera and performing automatic focus; or when the third pressing force is first greater than a third threshold and then less than the first threshold, starting a camera and performing photographing; or when the third pressing force is greater than a third threshold and the third pressing duration is greater than the second threshold, starting a camera and performing video recording.

In this embodiment of this application, when displaying an interface of a non-camera application, the electronic device may enter the camera application in response to the operation performed by the user on the virtual button, and perform a corresponding function based on the pressing force and the pressing duration of pressing the virtual button, so that functions such as photographing and video recording can be quickly performed. This helps improve user experience.

According to a second aspect, an interaction method is provided. The method is applied to an electronic device. The electronic device includes a virtual button, and the virtual button is used to detect a pressing operation of a user. The electronic device displays a first interface, and the first interface is a photographing interface. The method includes: detecting a first pressing operation performed by the user on the virtual button, and determining first pressing force and first pressing duration; determining a first function based on the first pressing force and the first pressing duration; and performing the first function in response to the first pressing operation.

With reference to the second aspect, in some implementations of the second aspect, when the first pressing force is greater than or equal to a first threshold and less than or equal to a third threshold, the first function is an automatic focus function.

With reference to the second aspect, in some implementations of the second aspect, the method further includes: detecting a second pressing operation performed by the user on the virtual button, and determining second pressing force and second pressing duration; and when the second pressing force is less than the first threshold and the second pressing duration is greater than or equal to a second threshold, displaying a focus frame in response to the second pressing operation, where the focus frame is used to identify a first object.

With reference to the second aspect, in some implementations of the second aspect, the virtual button is further used to detect a slide gesture of the user, and the method further includes: switching the first object in the focus frame to a second object in response to a second slide gesture of the user on the virtual button, where a direction of the second slide gesture is a length direction of the electronic device.

With reference to the second aspect, in some implementations of the second aspect, the method further includes: locking the focus frame and the first object in response to a continuous pressing operation performed by the user on the virtual button, where pressing force of the continuous pressing operation is less than the first threshold.

With reference to the second aspect, in some implementations of the second aspect, when the first pressing force is first greater than the third threshold and then less than the first threshold, the first function is a photographing function.

With reference to the second aspect, in some implementations of the second aspect, when the first pressing force is greater than the third threshold and the first pressing duration is greater than the second threshold, the first function is a video recording function.

With reference to the second aspect, in some implementations of the second aspect, when the first pressing force is less than the first threshold and the first pressing duration is greater than the second threshold, the first function is displaying a viewfinder frame.

With reference to the second aspect, in some implementations of the second aspect, the virtual button is further used to detect a slide gesture of the user, and the method further includes: displaying an adjustment bar for a first parameter in response to a parameter adjustment operation of the user; and in response to the slide gesture of the user on the virtual button, if a direction of the slide gesture is a thickness direction of the electronic device, switching the adjustment bar for the first parameter to an adjustment bar for a second parameter, or if a direction of the slide gesture is the length direction of the electronic device, adjusting the first parameter.

According to a third aspect, an interaction method is provided. The method is applied to an electronic device. The electronic device includes a virtual button, and the virtual button is used to detect a pressing operation of a user. The electronic device displays a first interface, and the first interface is an interface of a non-camera application. The method includes: detecting that at least two of four edge areas of a screen are touched, further detecting a first pressing operation performed by the user on the virtual button, and determining first pressing force and first pressing duration; starting a camera application, and determining a first function based on the first pressing force and the first pressing duration; and performing the first function in response to the first pressing operation.

With reference to the third aspect, in some implementations of the third aspect, when the first pressing force is greater than or equal to a first threshold and less than or equal to a third threshold, the first function is an automatic focus function.

With reference to the third aspect, in some implementations of the third aspect, when the first pressing force is first greater than the third threshold and then less than the first threshold, the first function is a photographing function.

With reference to the third aspect, in some implementations of the third aspect, when the first pressing force is greater than the third threshold and the first pressing duration is greater than a second threshold, the first function is a video recording function.

According to a fourth aspect, a computer-readable storage medium is provided. The computer-readable storage medium includes a computer program or instructions, and when the computer program or the instructions are run on a computer, the method according to the first aspect and any possible implementation of the first aspect is performed.

According to a fifth aspect, a computer program product is provided. The computer program product includes a computer program or instructions, and when the computer program or the instructions are run on a computer, the method according to the first aspect and any possible implementation of the first aspect is performed.

According to a sixth aspect, a computer program is provided. When the computer program is run on a computer, the method according to the first aspect and any possible implementation of the first aspect is performed.

According to a seventh aspect, an embodiment of this application provides an electronic device. The electronic device includes modules/units for performing the method according to any one of the foregoing aspects or the possible designs of the foregoing aspects. The modules/units may be implemented by hardware, or may be implemented by hardware executing corresponding software.

According to an eighth aspect, an embodiment of this application provides a chip. The chip is coupled to a memory in an electronic device, and is configured to invoke a computer program stored in the memory and perform the technical solutions according to any one of the foregoing aspects and the possible designs of the foregoing aspects in embodiments of this application. In embodiments of this application, "coupling" means that two components are directly or indirectly combined with each other.

According to a ninth aspect, an embodiment of this application provides a graphical user interface on an electronic device. The electronic device has a display, one or more memories, and one or more processors. The one or more processors are configured to execute one or more computer programs stored in the one or more memories. The graphical user interface includes a graphical user interface displayed when the electronic device performs any technical solution of the foregoing aspect or any possible design of the foregoing aspect.

According to a tenth aspect, an embodiment of this application provides an electronic device. The electronic device includes one or more processors and one or more memories. The one or more memories store one or more computer programs, the one or more computer programs include instructions, and when the instructions are executed by the one or more processors, any one of the foregoing aspects or the possible implementations of the foregoing aspects is performed.

### BRIEF DESCRIPTION OF DRAWINGS

FIG. 1 is a form diagram of setting of a virtual button according to an embodiment of this application;
FIG. 2 is another form diagram of setting of a virtual button according to an embodiment of this application;
FIG. 3 is a diagram of a structure of an electronic device according to an embodiment of this application;
FIG. 4 is a block diagram of a software structure of an electronic device according to an embodiment of this application;
FIG. 5(a) to FIG. 5(d) show a group of GUIs according to an embodiment of this application;
FIG. 6 shows another group of GUIs according to an embodiment of this application;
FIG. 7(a) and FIG. 7(b) show another group of GUIs according to an embodiment of this application;
FIG. 8(a) to FIG. 8(d) show another group of GUIs according to an embodiment of this application;
FIG. 9(a) to FIG. 9(e) show another group of GUIs according to an embodiment of this application;
FIG. 10(a) and FIG. 10(b) show another group of GUIs according to an embodiment of this application;
FIG. 11(a)-1 to FIG. 11(c) show another group of GUIs according to an embodiment of this application;
FIG. 12 is a schematic flowchart of an interaction method according to an embodiment of this application;
FIG. 13 is a schematic flowchart of an interaction method according to an embodiment of this application;
FIG. 14 is a schematic flowchart of an interaction method according to an embodiment of this application; and
FIG. 15 is a diagram of composition of an electronic device according to an embodiment of this application.

### DESCRIPTION OF EMBODIMENTS

The following describes technical solutions of embodiments in this application with reference to accompanying drawings.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

The following describes an electronic device, a user interface used for the electronic device, and embodiments used for using the electronic device. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. An example embodiment of a portable electronic device includes but is not limited to a portable electronic device using iOS^{®}, Android^{®}, Microsoft^{®}, or another operating system. The portable electronic device may alternatively be another portable electronic device, like a laptop (Laptop). It should be further understood that, in some other embodiments, the electronic device may not be the portable electronic device but a desktop computer.

That a virtual button is disposed on the electronic device specifically means that a touch sensor and a pressure sensor are disposed on the electronic device. For example, the touch sensor and the pressure sensor may be disposed at a position at which a physical button needs to be disposed on the electronic device. The electronic device may detect, based on touch effect of the touch sensor and piezoelectric effect of the pressure sensor, a pressing operation entered by a user, to implement related functions such as screen locking and volume adjustment of the physical button. In this way, a quantity of physical buttons disposed on a surface of the electronic device can be reduced, and an appearance of the electronic device can be improved. In some other embodiments, this type of button may also be referred to as a name like a touch button. This is not limited in this embodiment of this application.

For example, the electronic device is a mobile phone. The virtual button may be disposed on a side frame (for example, a left side frame or a right side frame) of the mobile phone. One or more touch sensors and one or more pressure sensors may be disposed on the side frame of the mobile phone.

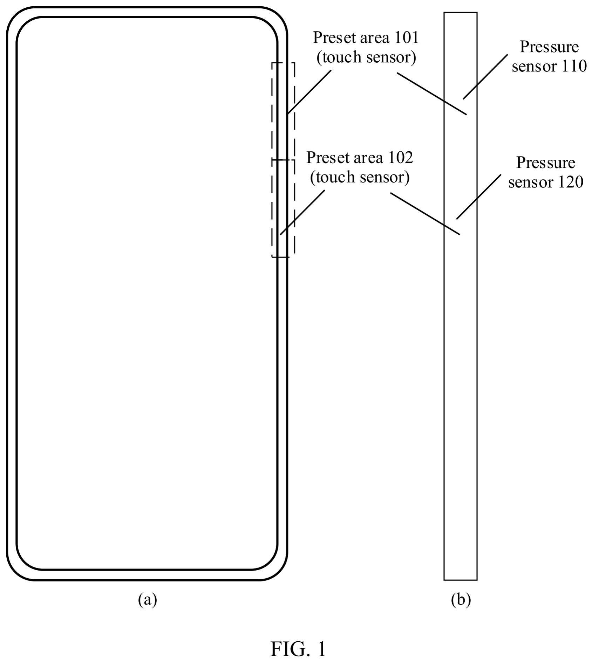

For example, the virtual button is disposed on the right side frame of the mobile phone 10 shown in (a) in FIG. 1. (b) in FIG. 1 shows distribution of touch sensors and pressure sensors configured to implement the virtual button. As shown in (b) in FIG. 1, a touch sensor and a pressure sensor 110 are disposed in a preset area 101 on the right side frame of the mobile phone 10, and a touch sensor and a pressure sensor 120 are disposed in a preset area 102. The pressure sensor 110 is disposed at a lower layer of the touch sensor in the preset area 101, and the pressure sensor 120 is disposed at a lower layer of the touch sensor in the preset area 102.

In some embodiments, the touch sensor disposed in the preset area 101 and the touch sensor disposed in the preset area 102 may be a same touch sensor. In other words, one touch sensor (referred to as a touch sensor 1) may be disposed on the right side frame of the mobile phone 10, and the touch sensor 1 is disposed in the preset area 101 and the preset area 102 on the right side frame. Certainly, the touch sensor 1 may alternatively be disposed on an entire right side frame of the mobile phone 10. This is not limited in this embodiment of this application.

In some embodiments, the touch sensor and the pressure sensor may be integrated into one sensor. The sensor may be disposed in the preset area 101 and the preset area 102 on the right side frame. Certainly, the sensor may alternatively be disposed on an entire right side frame of the mobile phone 10. This is not limited in this embodiment of this application.

In some embodiments, if the mobile phone 10 is a curved-screen mobile phone, a touch sensor corresponding to the virtual button may be integrated with a touch sensor on a touchscreen of the mobile phone 10. In other words, the touch sensor of the virtual button is the touch sensor on the touchscreen of the mobile phone 10. If a touchscreen of the mobile phone 10 is a flat-screen mobile phone, a touch sensor of the virtual button is a touch sensor independent of the touchscreen of the mobile phone 10. In other words, the touch sensor of the virtual button is different from the touch sensor on the touchscreen of the mobile phone 10.

In some other embodiments, the touch sensor disposed in the preset area 101 and the touch sensor disposed in the preset area 102 may be at least two touch sensors. For example, the mobile phone 10 is a flat-screen mobile phone, and a touch sensor may be disposed in each of the preset area 101 and the preset area 102 on the right side frame of the mobile phone 10.

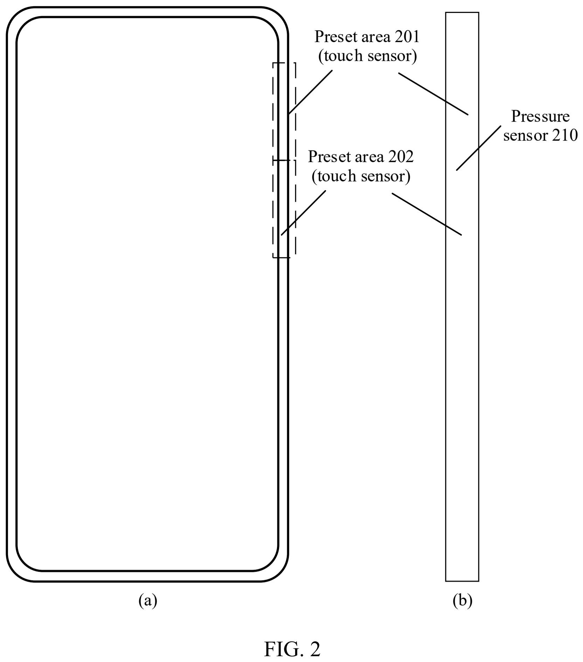

For another example, a touch button is disposed on a right side frame of a mobile phone 20 shown in (a) in FIG. 2. (b) in FIG. 2 shows distribution of touch sensors and a pressure sensor configured to implement the touch button. As shown in (b) in FIG. 2, a touch sensor is disposed in a preset area 201 on the right side frame of the mobile phone 20, a touch sensor is disposed in a preset area 202, and a pressure sensor 210 is disposed at a junction of the preset area 201 and the preset area 202. The pressure sensor 210 is disposed at a lower layer of the touch sensor in the preset area 201 and the touch sensor in the preset area 202.

For example, for a position of the pressure sensor 210 on the right side frame of the mobile phone 20, refer to positions of physical buttons (such as a "volume+" button and a "volume" button) on the side frame of the mobile phone. For example, the pressure sensor 210 may be disposed between a position of the "volume+" button on the side frame of the mobile phone and a position of the "volume" button on the side frame of the mobile phone. The preset area 201 is on the right side frame of the mobile phone 20, and is located above a position of the pressure sensor 210. The preset area 202 is on the right side frame of the mobile phone 20, and is located below the position of the pressure sensor 210. Sizes of the preset area 201 and the preset area 202 are preconfigured in the mobile phone 20.

In some embodiments, the touch sensor disposed in the preset area 201 and the touch sensor disposed in the preset area 202 may be a same touch sensor.

In some other embodiments, the touch sensors disposed in the preset area 201 and the preset area 202 may be at least two touch sensors.

For example, the pressure sensors (for example, the pressure sensor 110, the pressure sensor 120, and the pressure sensor 210) in this embodiment of this application may be piezoelectric pressure sensors. For example, the piezoelectric pressure sensor may be a piezoelectric ceramic sensor. Compared with another pressure sensor, the piezoelectric ceramic sensor has higher sensitivity.

Certainly, a touch button may be disposed on each of two side frames (for example, the left side frame and the right side frame) of the mobile phone. In other words, one or more pressure sensors and one or more touch sensors (not shown in the figure) may be disposed on both the left side frame and the right side frame of the mobile phone, to implement a function of the touch button.

The foregoing describes a structure that is of the electronic device and that is used to implement a virtual button. The following describes an internal structure of the electronic device.

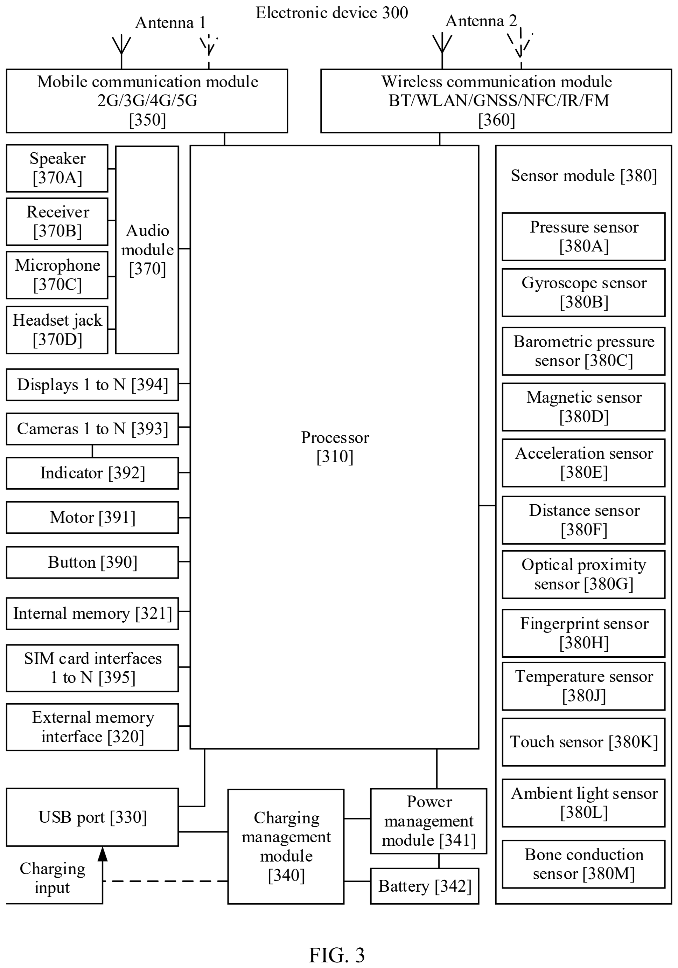

FIG. 3 is a diagram of a structure of an electronic device 300. The electronic device 300 may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, a subscriber identity module (subscriber identity module, SIM) card interface 395, and the like. The sensor module 380 may include a pressure sensor 380A, a gyroscope sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like.

It may be understood that the structure shown in this embodiment of this application does not constitute a specific limitation on the electronic device 300. In some other embodiments of this application, the electronic device 300 may include more or fewer components than those shown in the figure, or a combination of a part of the components, or splits from a part of the components, or an arrangement of different components. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 300. The controller may generate an operation control signal based on an instruction operation code and a time sequence signal, to complete control of instruction reading and instruction execution.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or data again, the instructions or data may be directly invoked from the memory. This avoids repeated access and reduces a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 300 may be implemented through the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the electronic device 300 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 350 may provide a wireless communication solution that is applied to the electronic device 300 and includes a 2G/3G/4G/5G or the like. The mobile communication module 350 may include at least one filter, a switch, a power amplifier, a low noise amplifier (low noise amplifier, LNA), and the like. The mobile communication module 350 may receive an electromagnetic wave through an antenna 3, perform processing such as filtering or amplification on the received electromagnetic wave, and transmit the electromagnetic wave to the modem processor for demodulation. The mobile communication module 350 may further amplify a signal modulated by the modem processor, and convert the signal into an electromagnetic wave for radiation through the antenna 3. In some embodiments, at least some functional modules in the mobile communication module 350 may be disposed in the processor 310. In some embodiments, at least some functional modules in the mobile communication module 350 may be disposed in a same device as at least some modules in the processor 310.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 370A, the receiver 370B, or the like), or displays an image or video by using the display 394. In some embodiments, the modem processor may be an independent component. In some other embodiments, the modem processor may be independent of the processor 310, and is disposed in a same component as the mobile communication module 350 or another functional module.

The wireless communication module 360 may provide a wireless communication solution that is applied to the electronic device 300 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 360 may be one or more components integrating at least one communication processor module. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2.

In some embodiments, the antenna 3 and the mobile communication module 350 in the electronic device 300 are coupled, and the antenna 2 and the wireless communication module 360 are coupled, so that the electronic device 300 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 300 implements a display function by using the GPU, the display 394, the application processor, or the like. The GPU is a microprocessor for image processing, and is connected to the display 394 and the application processor. The GPU is configured to: perform mathematical and geometric computation, and render an image. The processor 310 may include one or more GPUs that execute program instructions to generate or change display information.

The display 394 is configured to display an image, a video, or the like. The display 394 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the electronic device 300 may include one or N displays 394, where N is a positive integer greater than 1.

The electronic device 300 may implement a photographing function through the ISP, the camera 393, the video codec, the GPU, the display 394, the application processor, and the like.

The ISP is configured to process data fed back by the camera 393. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 393.

The camera 393 is configured to capture a still image or video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 300 may include one or N cameras 393, where N is a positive integer greater than 1.

The digital signal processor is configured to process a digital signal, and may process another digital signal in addition to the digital image signal. For example, when the electronic device 300 selects a frequency, the digital signal processor is configured to perform Fourier transform on frequency energy and the like.

The video codec is configured to compress or decompress a digital video. The electronic device 300 may support one or more video codecs. In this way, the electronic device 300 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the electronic device 300 may be implemented by using the NPU, for example, image recognition, facial recognition, speech recognition, and text understanding.

The external memory interface 320 may be configured to connect to an external memory card, for example, a Micro SD card, to expand a storage capability of the electronic device 300. The external memory card communicates with the processor 310 through the external memory interface 320, to implement a data storage function. For example, files such as music and videos are stored in the external storage card.

The internal memory 321 may be configured to store computer executable program code, where the executable program code includes instructions. The processor 310 executes various functional applications and data processing of the electronic device 300 by running the instructions stored in the internal memory 321. The internal memory 321 may include a program storage area and a data storage area. The program storage area may store an operating system, an application required by at least one function (for example, a voice playing function or an image playing function), and the like. The data storage area may store data (for example, audio data and a phone book) and the like created when the electronic device 300 is used. In addition, the internal memory 321 may include a high-speed random access memory, and may further include a nonvolatile memory, for example, at least one magnetic disk storage device, a flash memory, or a universal flash storage (universal flash storage, UFS).

The electronic device 300 may implement audio functions, for example, music playing and recording, by using the audio module 370, the speaker 370A, the telephone receiver 370B, the microphone 370C, the headset jack 370D, the application processor, and the like.

The audio module 370 is configured to convert digital audio information into an analog audio signal output, and is further configured to convert an analog audio input into a digital audio signal. The audio module 370 may be further configured to encode and decode an audio signal. In some embodiments, the audio module 370 may be disposed in the processor 310, or some functional modules in the audio module 370 are disposed in the processor 310.

The speaker 370A, also referred to as a "loudspeaker", is configured to convert an audio electrical signal into a sound signal. The electronic device 300 may be used to listen to music or answer a call in a hands-free mode over the speaker 170A.

The receiver 370B, also referred to as an "earpiece", is configured to convert an audio electrical signal into a sound signal. When a call is answered or voice information is received by using the electronic device 300, the receiver 370B may be put close to a human ear to listen to a voice.

The microphone 370C, also referred to as a "mike" or a "mic", is configured to convert a sound signal into an electrical signal. When making a call or sending voice information, the user may make a sound near the microphone 370C through the mouth of the user, to enter a sound signal to the microphone 370C. At least one microphone 370C may be disposed in the electronic device 300. In some other embodiments, two microphones 370C may be disposed in the electronic device 300, to collect a sound signal and implement a noise reduction function. In some other embodiments, three, four, or more microphones 370C may alternatively be disposed in the electronic device 300, to collect a sound signal, implement noise reduction, identify a sound source, implement a directional recording function, and the like.

The pressure sensor 380A is configured to sense a pressure signal, and may convert the pressure signal into an electrical signal. In some embodiments, the pressure sensor 380A may be disposed on the display 394. There are a plurality of types of pressure sensors 380A such as a resistive pressure sensor, an inductive pressure sensor, and a capacitive pressure sensor. The capacitive pressure sensor may include at least two parallel plates made of conductive materials. When force is applied to the pressure sensor 380A, capacitance between electrodes changes. The electronic device 300 determines pressure strength based on the change of the capacitance. When a touch operation is performed on the display 394, the electronic device 300 detects strength of the touch operation by using the pressure sensor 380A. The electronic device 300 may also calculate a touch location based on a detection signal of the pressure sensor 380A. In some embodiments, touch operations that are performed in a same touch position but have different touch operation intensity may correspond to different operation instructions. For example, when a touch operation whose touch operation intensity is greater than or equal to a first pressure threshold acts on an alarm clock application icon, an instruction for creating an alarm clock is executed.

The fingerprint sensor 380H is configured to collect a fingerprint. The electronic device 300 may use a feature of the collected fingerprint to implement fingerprint-based unlocking, application lock access, fingerprint-based photographing, fingerprint-based call answering, and the like. For example, when a mobile phone detects a touch operation of the user on a lock screen, the mobile phone may collect fingerprint information of the user through the fingerprint sensor 380H, and match the collected fingerprint information with fingerprint information preset in the mobile phone. If matching succeeds, the mobile phone may enter a non-lock screen from the lock screen.

The touch sensor 380K may also be referred to as a "touch panel". The touch sensor 380K may be disposed on the display 394, and the touch sensor 380K and the display 394 form a touchscreen, which is also referred to as a "touchscreen". The touch sensor 380K is configured to detect a touch operation on or near the touch sensor 380K. The touch sensor may transfer the detected touch operation to the application processor to determine a type of a touch event. The display 394 may provide a visual output related to the touch operation. In some other embodiments, the touch sensor 380K may alternatively be disposed on a surface of the electronic device 300 at a location different from that of the display 394.

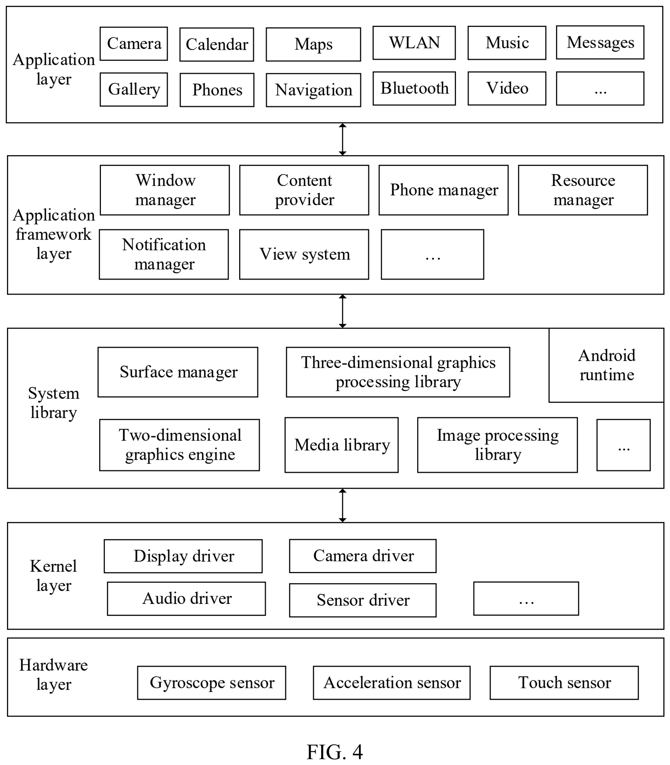

FIG. 4 is a block diagram of a software structure of the electronic device 300 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 4, the application layer may include Camera, Settings, a third-party application, and the like. The third-party application may include Gallery, Calendar, Phones, Maps, Navigation, WLAN, Bluetooth, Music, Videos, Messages, and the like.

The application framework layer provides an application programming interface (application programming interface, API) and a programming framework for an application at the application layer. The application framework layer may include some predefined functions.

As shown in FIG. 4, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, audio, calls that are made and answered, a browsing history and bookmarks, an address book, and the like.

The view system includes a visual control, like a control for displaying a text or a control for displaying a picture, for example, displaying indication information for prompting a virtual shutter button in this embodiment of this application. The view system may be configured to construct an application. A display interface may include one or more views. For example, a display interface including a notification icon of Messages may include a text display view and an image display view.

The phone manager is configured to provide a communication function of the electronic device 300, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

In addition, the system library may further include a status monitoring service module, for example, a physical status identification module, configured to analyze and identify a user gesture; and a sensor service module, configured to monitor sensor data uploaded by various sensors at a hardware layer, to determine a physical status of the electronic device 100.

The kernel layer is a layer between hardware and software. The kernel layer includes at least a display driver, a camera driver, an audio driver, and a sensor driver.

The hardware layer may include various types of sensors, for example, various types of sensors described in FIG. 1 to FIG. 3, and an acceleration sensor, a gyroscope sensor, a touch sensor, and the like in embodiments of this application.

With continuous progress of technologies, the user has increasingly high requirements on the electronic device. To obtain a lighter and thinner body and better sealing performance, the electronic device tends to reduce internal structural parts, and develops toward an integrated body. For example, a 3.5 mm headset jack originally configured on the electronic device may be replaced with a Bluetooth headset, or share a port with a charging port. Currently, some electronic devices use virtual buttons to replace physical buttons (also referred to as physical buttons), to improve body integration. However, currently, an interaction manner and an application scenario of a virtual button are single, and a function of the virtual button is not fully utilized.

Before embodiments of this application are described, several possible application scenarios associated with a virtual button in embodiments of this application are first described.
1. Adjust a system parameter on a home screen interface.

When displaying the home screen interface, the electronic device may adjust the system parameter in response to an operation performed by the user on the virtual button.

For example, the system parameter may include volume and brightness.

For example, the home screen interface may be a home screen, a leftmost screen, or the like.

2. Adjust a system parameter on an application interface.

When displaying some application interfaces, the electronic device may adjust the system parameter in response to an operation performed by the user on the virtual button.

For example, when displaying an interface of a music application, the electronic device detects an operation performed by the user on the virtual button, and may adjust a volume in response to the operation.

For another example, when displaying an interface of a call application, the electronic device detects an operation performed by the user on the virtual button, and may adjust a volume in response to the operation.

3. Adjust an application parameter on an application interface.

When displaying some application interfaces, the electronic device may adjust, in response to an operation performed by the user on the virtual button, an application parameter corresponding to the application. The application parameter may be understood as a corresponding parameter when the application performs a function.

For example, a camera application is used as an example. Parameters of the camera application may include a focal length, light sensitivity (ISO), and the like.

4. Start an application.

The electronic device may start an application #1 in response to an operation of the user on the virtual button. In this application scenario, before the electronic device starts the application #1, the electronic device may be in a screen-locked state, or may be in a state of running an application #2 in the foreground, or may be in a state of displaying a home screen interface.

For example, when being in the screen-locked state, the electronic device detects an operation performed by the user on the virtual button, and may start the camera application in response to the operation.

For another example, when displaying the home screen, the electronic device detects an operation performed by the user on the virtual button, and may start the camera application in response to the operation.

For another example, when displaying an interface of a gallery application, the electronic device detects an operation performed by the user on the virtual button, and may start the camera application in response to the operation.

The foregoing describes several possible scenarios in embodiments of this application. The following describes, with reference to a graphical user interface (graphical user interface, GUI), an interaction method provided in embodiments of this application.

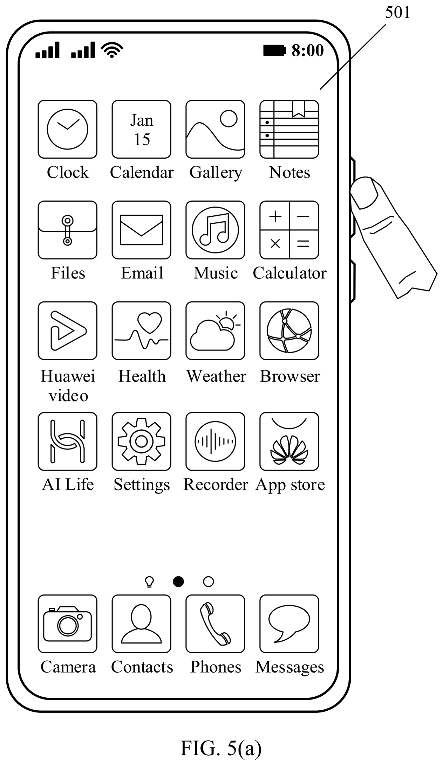

FIG. 5(a) to FIG. 5(d) show a group of GUIs according to an embodiment of this application.

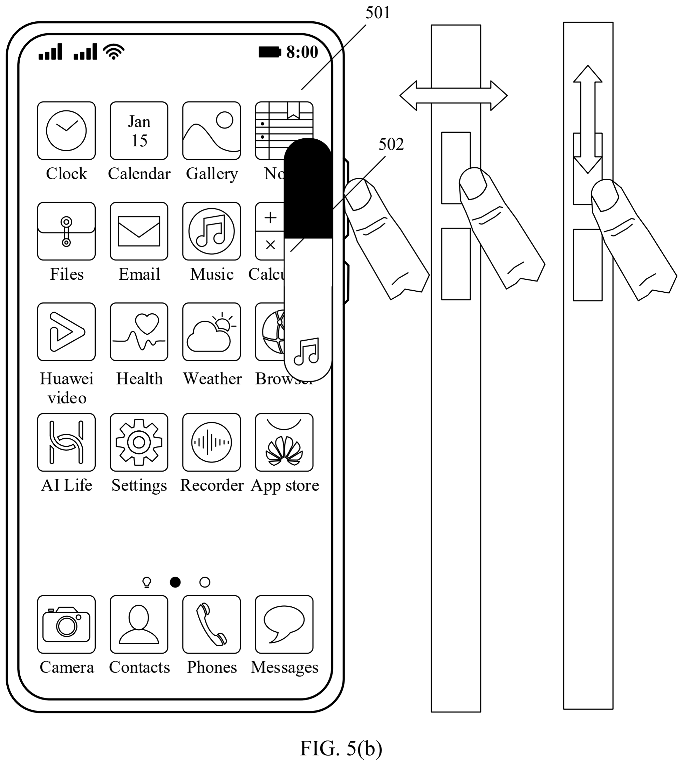

As shown in FIG. 5(a), an electronic device displays an interface 501, and the interface 501 is a home screen. When displaying the interface 501, the electronic device detects an operation of pressing a virtual button by a user, and may determine pressing force and pressing duration of the user. When determining that the pressing force of the user is less than a first threshold and the pressing duration is greater than or equal to a second threshold, the electronic device displays a GUI shown in FIG. 5(b).

It should be noted that the virtual button in the figure protrudes relative to a frame of the electronic device only for ease of identifying the virtual button. In an actual electronic device, a sensing area of the virtual button is a part of the frame, and does not protrude from the frame.

It should be noted that, in this embodiment of this application, an example in which only the interface 501 is the home screen is used, and it should not be construed as a specific limitation on embodiments of this application. For example, the interface 501 may alternatively be a leftmost interface, a settings interface, a lock screen, or the like.

In this embodiment of this application, the home screen, the leftmost interface, and the lock screen may be collectively referred to as a home screen interface.

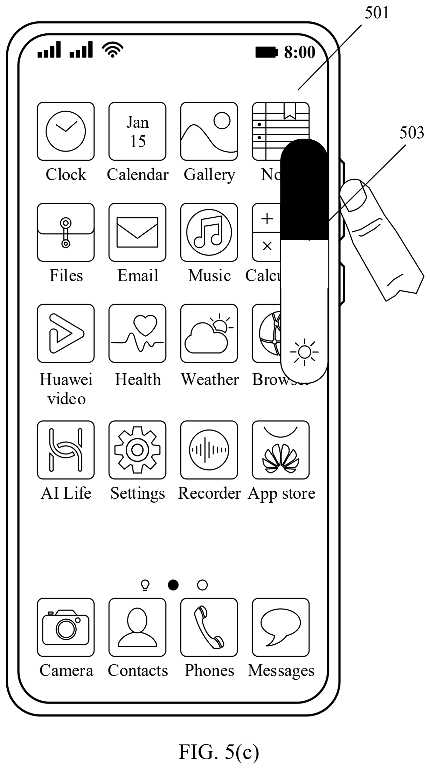

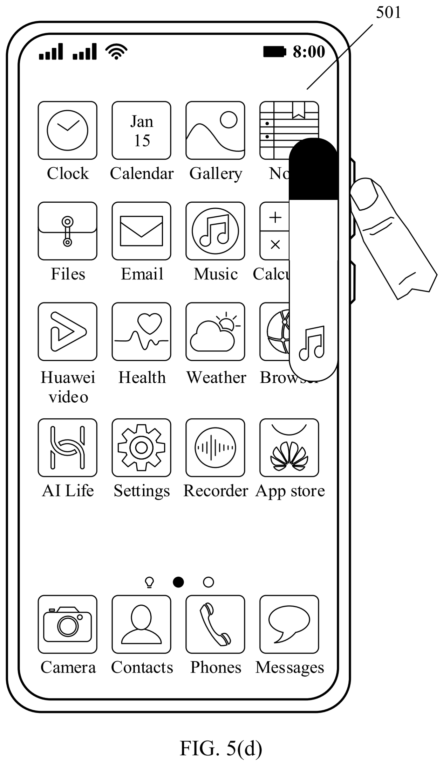

As shown in FIG. 5(b), when determining that the pressing force of the user is less than the first threshold and the pressing duration is greater than or equal to the second threshold, the electronic device displays a system volume adjustment bar 502 in response to the operation of pressing the virtual button by the user. The virtual button may detect a slide gesture of the user. Therefore, the electronic device may perform different functions based on different directions of slide gestures of the user. When detecting that a direction of the slide gesture of the user is a thickness direction of the electronic device, the electronic device may switch the system volume adjustment bar to an adjustment bar for another parameter, as shown in FIG. 5(c). When detecting that a direction of the slide gesture of the user is a length direction of the electronic device, the electronic device may adjust a parameter, as shown in FIG. 5(d).

It should be noted that, in this embodiment of this application, only an example in which the pressing force is less than the first threshold, the pressing duration is greater than or equal to the second threshold, and the electronic device displays the system volume adjustment bar is used. However, this should not be construed as a limitation on this embodiment of this application. In some other embodiments of this application, when the pressing force is less than the first threshold and the pressing duration is greater than or equal to the second threshold, the electronic device may alternatively display an adjustment bar for another parameter, for example, a speaker volume adjustment bar or a message alert tone volume adjustment bar.

As shown in FIG. 5(c), when determining that the sliding direction of the user is the thickness direction of the electronic device, the electronic device may switch the system volume adjustment bar 502 to a brightness adjustment bar 503.

It may be understood that, when the user continues to slide in the thickness direction of the electronic device, the electronic device may further switch the brightness adjustment bar 503 to an adjustment bar for another parameter, for example, a speaker volume adjustment bar or a message alert tone volume adjustment bar.

It may be further understood that, after switching the system volume adjustment bar 502 to the brightness adjustment bar 503, the electronic device detects a gesture of sliding in an opposite direction of the user, and then may switch the brightness adjustment bar 503 to the system volume adjustment bar 502.

It should be noted that, in this embodiment of this application, only an example in which the electronic device may switch the system volume adjustment bar 502 to the brightness adjustment bar 503 when determining that the sliding direction of the user is the thickness direction of the electronic device is used. However, this should not be construed as a limitation on this embodiment of this application. In some other embodiments of this application, when the electronic device determines that the sliding direction of the user is the thickness direction of the electronic device, the electronic device may switch the system volume adjustment bar 502 to the message alert tone volume adjustment bar.

As shown in FIG. 5(d), when determining that the sliding direction of the user is the length direction of the electronic device, the electronic device may adjust a system volume. For example, if the sliding direction of the user is sliding upward, the electronic device may increase the system volume; or if the sliding direction of the user is sliding downward, the electronic device may decrease the system volume.

In this embodiment of this application, the electronic device may display the parameter adjustment bar based on the force and the time of pressing the virtual button by the user, so that the user can perform an operation conveniently. In addition, gestures of switching the parameter bar and adjusting the parameter are simple, which conforms to a daily use habit and can improve user experience.

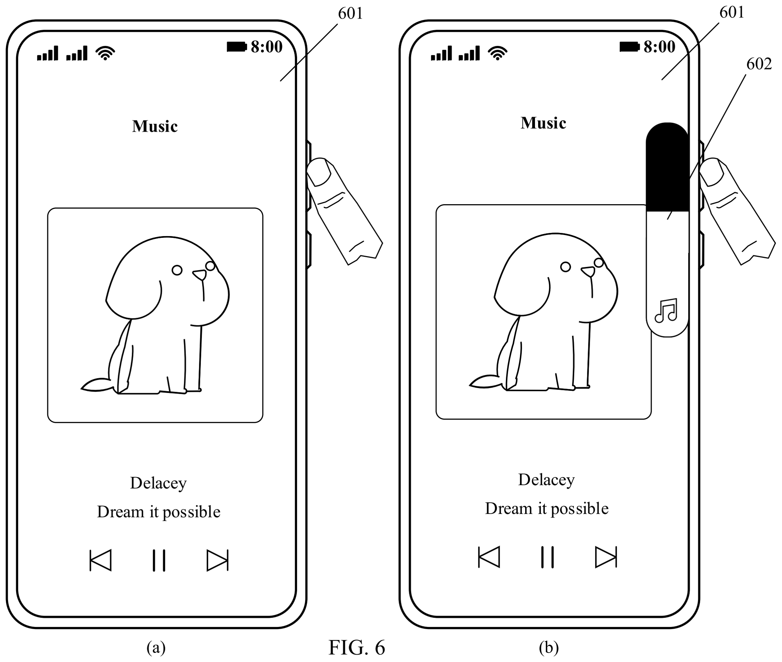

FIG. 6 shows another group of GUIs according to an embodiment of this application.

As shown in (a) in FIG. 6, an electronic device displays an interface 601, and the interface 601 is an interface of a music application. When displaying the interface 601, the electronic device detects an operation of pressing a virtual button by a user, and may determine pressing force and pressing duration of the user. When determining that the pressing force of the user is less than a first threshold and the pressing duration is greater than or equal to a second threshold, the electronic device displays a GUI shown in (b) in FIG. 6.

As shown in (b) in FIG. 6, when determining that the pressing force of the user is less than the first threshold and the pressing duration is greater than or equal to the second threshold, in response to the operation of pressing the virtual button by the user, the electronic device may display a volume adjustment bar 602 of the music application, which is different from that in FIG. 5(b), because the electronic device displays the interface of the music application.

It should be understood that, if the interface 601 is an interface of a video application, the electronic device may display a volume adjustment bar of the video application.

It should be further understood that the electronic device may further switch the volume adjustment bar 602 of the music application or adjust a volume of the music application in response to a slide gesture of the user. For specific descriptions, refer to the descriptions of FIG. 5(a) to FIG. 5(d). For brevity, details are not described herein again.

It can be learned by comparing FIG. 5(a) to FIG. 5(d) and FIG. 6 that when displaying the parameter adjustment bar, the electronic device may display different parameter adjustment bars based on different interfaces.

In this embodiment of this application, the electronic device may display the parameter adjustment bar based on the force and the time of pressing the virtual button by the user, so that the user can perform an operation conveniently. In addition, gestures of switching the parameter bar and adjusting the parameter are simple, which conforms to a daily use habit and can improve user experience.

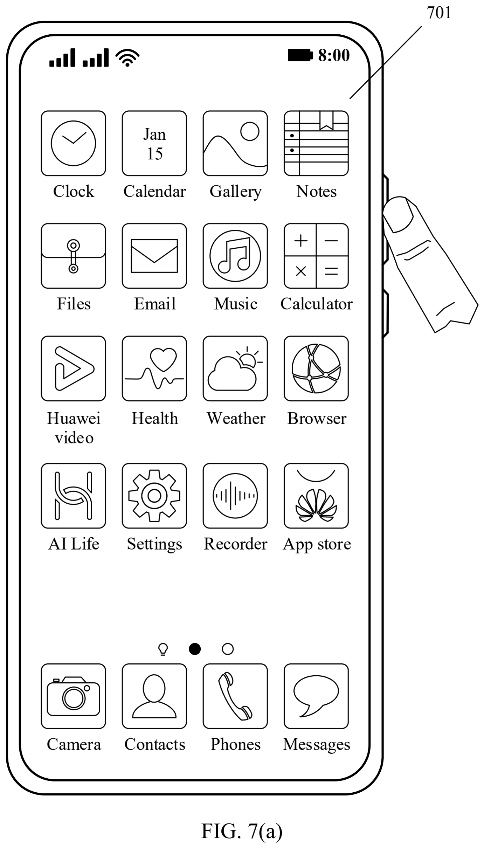

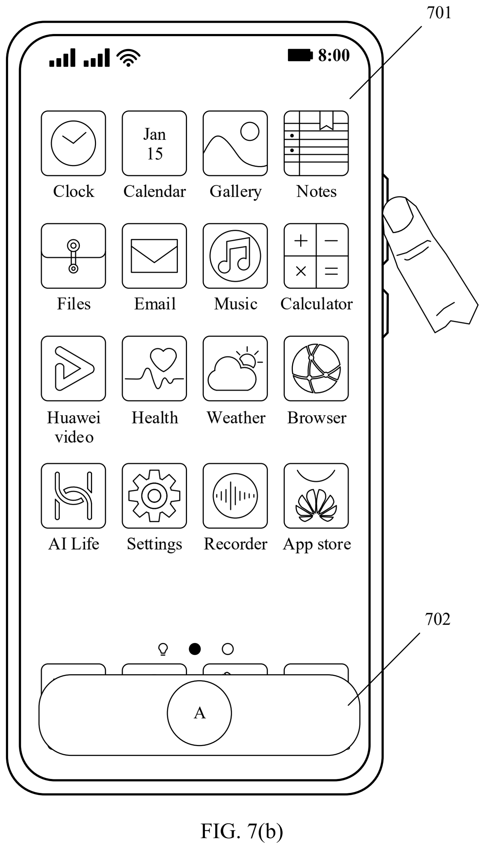

FIG. 7(a) and FIG. 7(b) show another group of GUIs according to an embodiment of this application.

As shown in FIG. 7(a), an electronic device displays an interface 701, and the interface 701 is a home screen. When displaying the interface 701, the electronic device detects an operation of pressing a virtual button by a user, and may determine pressing force and pressing duration of the user. When determining that the pressing force of the user is greater than or equal to a second threshold and the pressing duration is greater than or equal to the second threshold, the electronic device displays a GUI shown in FIG. 7(b).

As shown in FIG. 7(b), when determining that the pressing force of the user is greater than or equal to the first threshold and the pressing duration is greater than or equal to the second threshold, the electronic device enables a voice assistant and displays a voice assistant bar 702 in response to the operation of pressing the virtual button by the user.

It should be noted that, in some other embodiments, the interface 701 may alternatively be a leftmost screen or a lock screen.

In a process of enabling the voice assistant, because the electronic device may detect the pressing force and the pressing time of the user, the electronic device may gradually display animation effect of activating the voice assistant based on a gradual increase of the pressing force and/or an increase of the pressing duration of the user, so that user experience can be enhanced.

In this embodiment of this application, the electronic device may enable the voice assistant based on the force and the time of pressing the virtual button by the user, so that the user can perform an operation conveniently, and user experience can be improved.

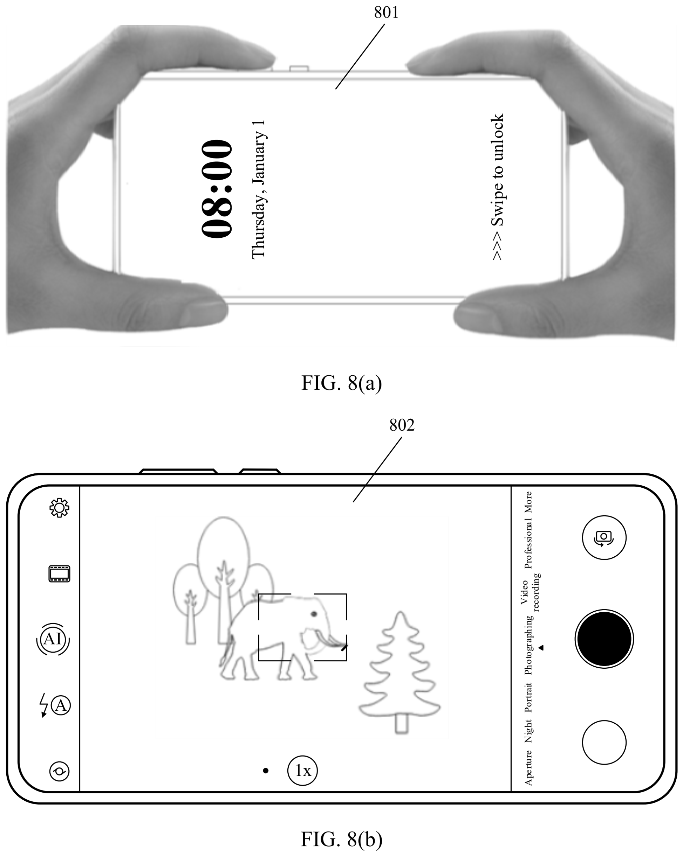

FIG. 8(a) to FIG. 8(d) show another group of GUIs according to an embodiment of this application.

As shown in FIG. 8(a), an electronic device displays an interface 801, and the interface 801 is a lock screen. When displaying the interface 801, if the electronic device detects that at least two of four edge areas of a screen are touched and detects a pressing operation performed by a user on a virtual button, the electronic device may determine pressing force and pressing duration, and perform different functions based on the pressing force and the pressing duration of the user.

As shown in FIG. 8(b), when determining that the pressing force is greater than or equal to a first threshold and less than or equal to a third threshold, the electronic device may start a camera application and perform an automatic focus function, that is, may jump from the interface 801 to an interface 802, and then perform automatic focus.

It should be understood that, when performing the automatic focus function, the electronic device may display a focus frame, or may not display a focus frame, or may first display a focus frame to mark a focused object and then no longer display the focus frame. This is not limited in this embodiment of this application.

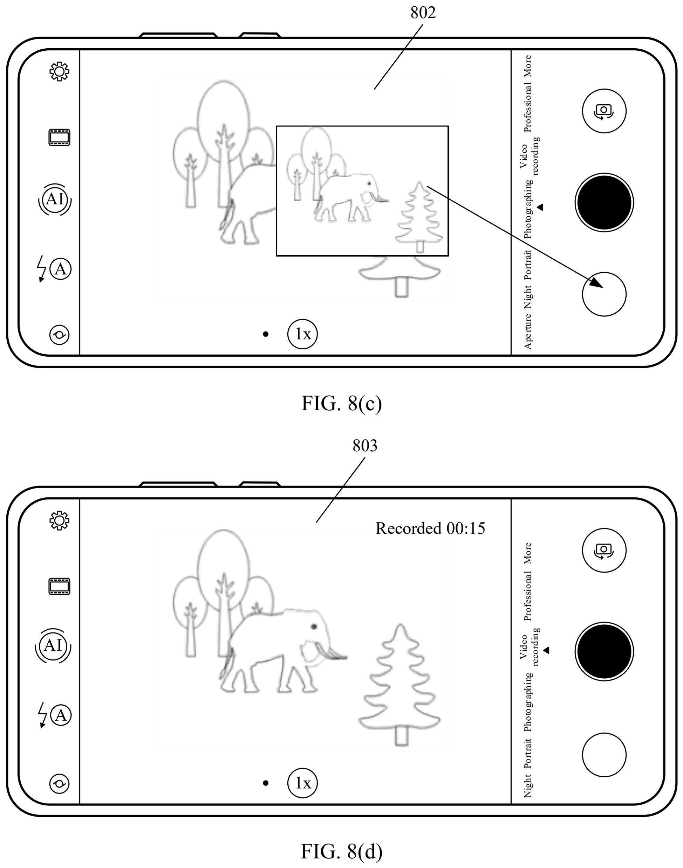

As shown in FIG. 8(c), when determining that the pressing force is first greater than the third threshold and then less than the first threshold, the electronic device may start the camera application and perform a photographing function, that is, may jump from the interface 801 to an interface 802, and then perform photographing.

As shown in FIG. 8(d), when determining that the pressing force is greater than the third threshold and the pressing duration is greater than or equal to a second threshold, the electronic device may start the camera application and perform a video recording function, that is, may jump from the interface 801 to an interface 803, and then perform video recording.

It should be noted that, in FIG. 8(a) to FIG. 8(d), only an example in which the electronic device enters the camera application from the lock screen is used, but this should not be understood as a specific limitation on this embodiment of this application. In some other embodiments of this application, when displaying another interface, the electronic device may enter the camera application in response to an operation of the user, and perform a corresponding function. For example, the interface displayed by the electronic device may alternatively be a leftmost screen, a home screen, an interface of an application, or the like.

In this embodiment of this application, when displaying an interface of a non-camera application, the electronic device may enter the camera application in response to the operation performed by the user on the virtual button, and perform a corresponding function based on the pressing force and the pressing duration of pressing the virtual button, so that functions such as photographing and video recording can be quickly performed. This helps improve user experience.

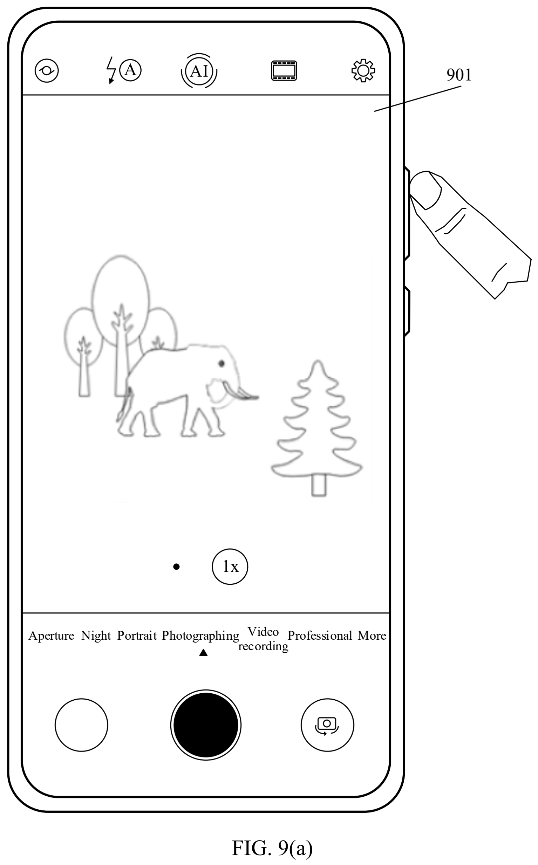

FIG. 9(a) to FIG. 9(e) show another group of GUIs according to an embodiment of this application.

As shown in FIG. 9(a), an electronic device displays an interface 901, and the interface 901 is a photographing interface. When displaying the interface 901, the electronic device detects an operation of pressing a virtual button by a user, may determine pressing force and pressing duration of the user, and may perform different functions based on the pressing force and the pressing duration of the user.

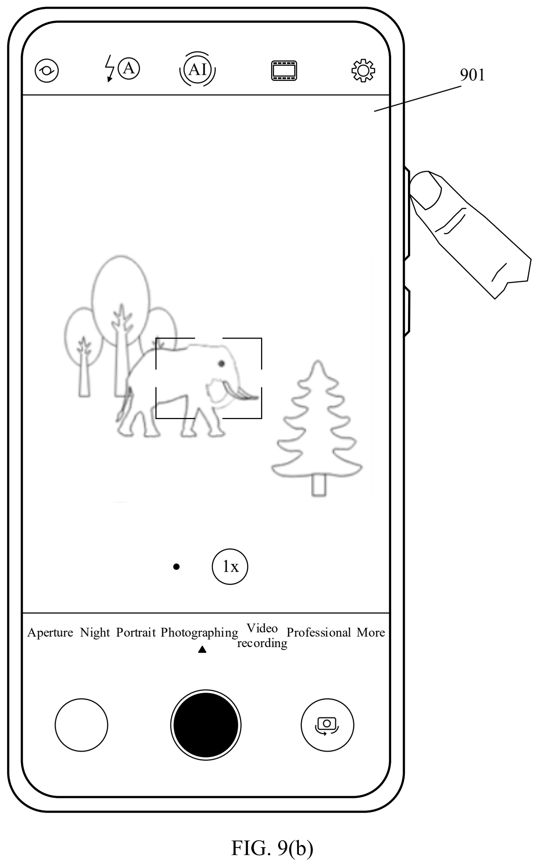

As shown in FIG. 9(b), when the electronic device determines that the pressing force is greater than or equal to a first threshold and less than or equal to a third threshold, the electronic device may perform an automatic focus function.

It should be understood that, when performing the automatic focus function, the electronic device may display a focus frame, or may not display a focus frame, or may first display a focus frame to mark a focused object and then no longer display the focus frame. This is not limited in this embodiment of this application.

Optionally, in some embodiments, when the electronic device does not display the focus frame when performing the automatic focus function, the electronic device may display the focus frame in response to an operation of activating the focus frame by the user.

For example, the operation of activating the focus frame by the user may be pressing the virtual button, and pressing force is less than the first threshold and pressing duration is greater than or equal to a second threshold.

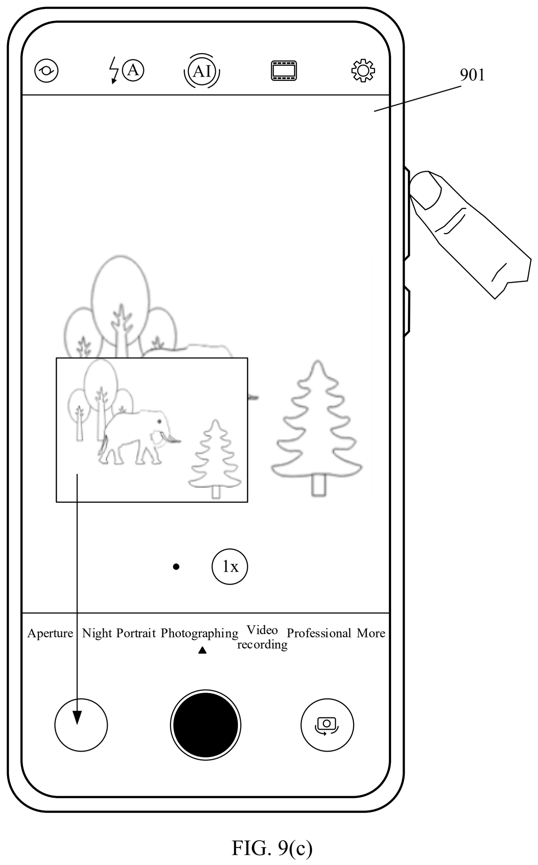

As shown in FIG. 9(c), when the electronic device determines that the pressing force is first greater than the second threshold and then less than the third threshold, the electronic device may perform a photographing function.

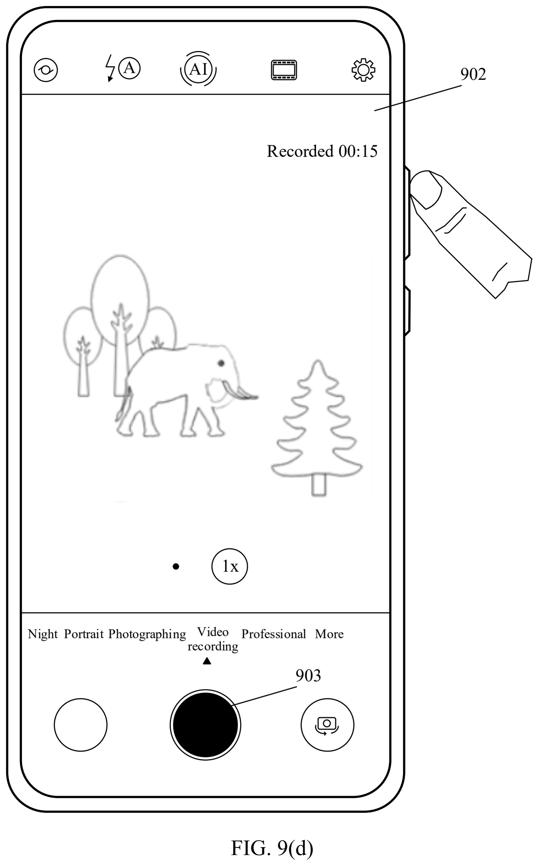

As shown in FIG. 9(d), when determining that the pressing force is greater than the third threshold and the pressing duration is greater than the second threshold, the electronic device switches to an interface 902. The interface 902 is a video recording interface.

When the electronic device switches to the video recording interface 902, the electronic device may directly perform video recording, or may perform video recording in response to a video recording operation of the user.

For example, the video recording operation of the user may be that the user taps a control 903.

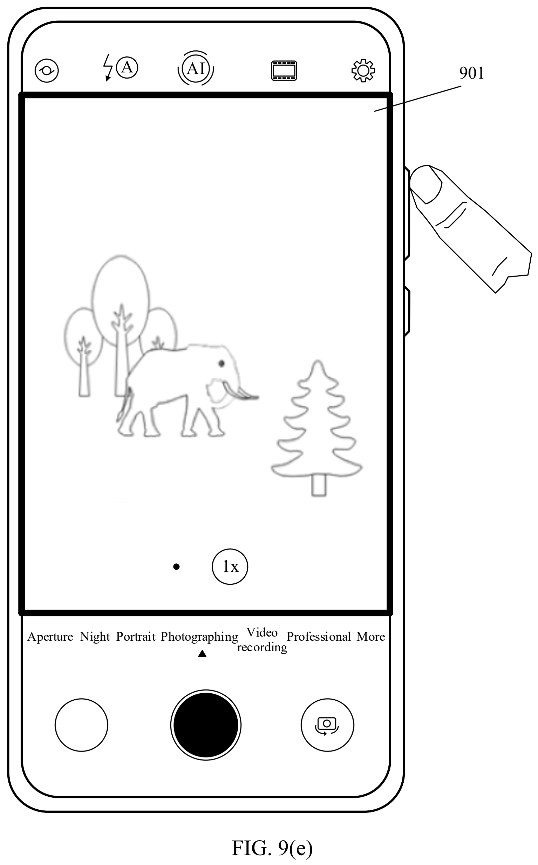

As shown in FIG. 9(e), when determining that the pressing force is less than the first threshold and the pressing duration is greater than or equal to the second threshold, the electronic device may display a viewfinder frame.

It may be understood that, when the electronic device performs the automatic focus function, if the pressing force of the user is less than the first threshold and the pressing duration is greater than or equal to the second threshold, the electronic device may display the focus frame. When the electronic device does not perform the automatic focus function but displays only the photographing interface, if the pressing force is less than the first threshold and the pressing duration is greater than or equal to the second threshold, the electronic device may display the viewfinder frame.

In this embodiment of this application, when running the camera application, the electronic device may perform a corresponding function based on the pressing force and the pressing duration of pressing the virtual button by the user, so that functions such as photographing and video recording can be quickly performed. This helps improve user experience.

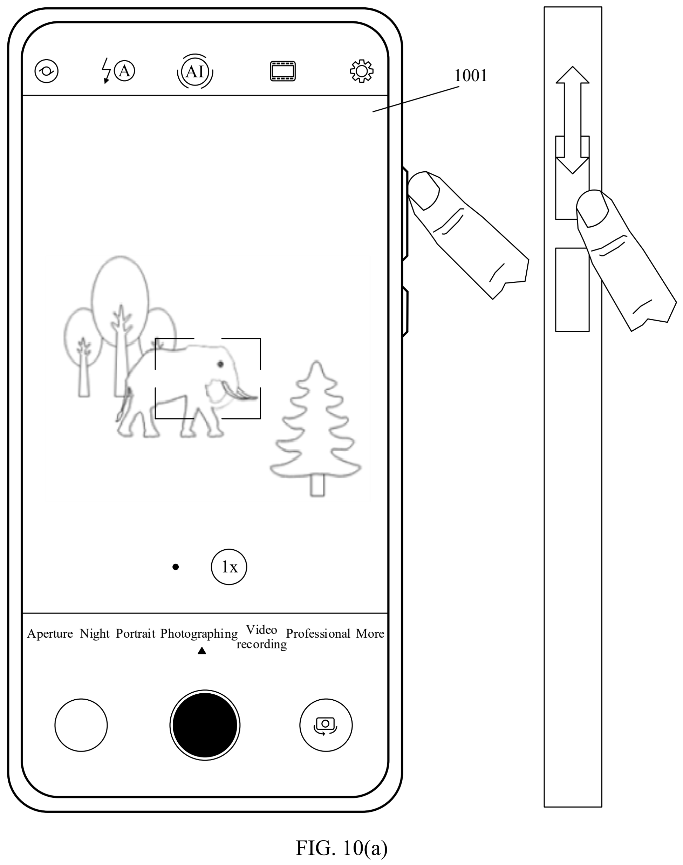

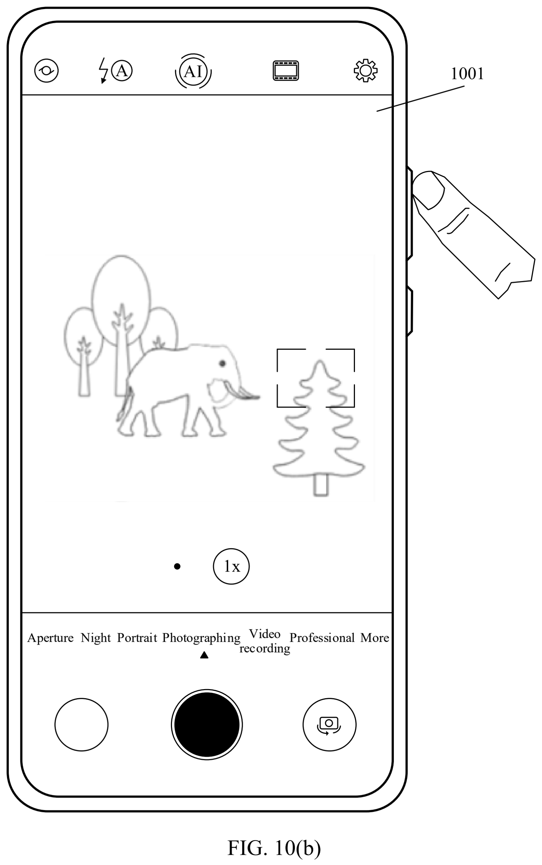

FIG. 10(a) and FIG. 10(b) show another group of GUIs according to an embodiment of this application.

As shown in FIG. 10(a), an electronic device displays an interface 1001, and the interface 1001 is an automatic focus interface. The electronic device may identify a focus object in the interface 1001. Because a virtual button may detect a slide gesture of a user, when detecting that a direction of the slide gesture of the user is a length direction of the electronic device, the electronic device may switch the focus object, as shown in FIG. 10(b). The electronic device may further lock the focus object in response to an operation of locking the focus object by the user.

As shown in FIG. 10(b), in response to sliding performed by the user on the virtual button, and when the sliding direction is the length direction of the electronic device, the electronic device may switch the focus object from an elephant to a tree.

Optionally, in some embodiments, the operation of switching the focus object by the user may alternatively be sliding performed by the user on the virtual button, and a sliding direction is a thickness direction of the electronic device.

When performing automatic focus, the electronic device may not only switch the focus object, but also lock the focus object in response to an operation of locking the focus object by the user.

For example, the operation of locking the focus object by the user may be continuously pressing the virtual button, and pressing force is less than the first threshold. For example, FIG. 10(a) and FIG. 10(b) are used as an example. In response to that the user continuously presses the virtual button twice and the pressing force is less than the first threshold, the electronic device may lock the focus object as the elephant.

It should be understood that continuously pressing the virtual button may be understood as pressing the virtual button for a plurality of times within a short time interval. The short time interval may be set by the user, or may be preset before delivery of the electronic device. This is not limited in this embodiment of this application.

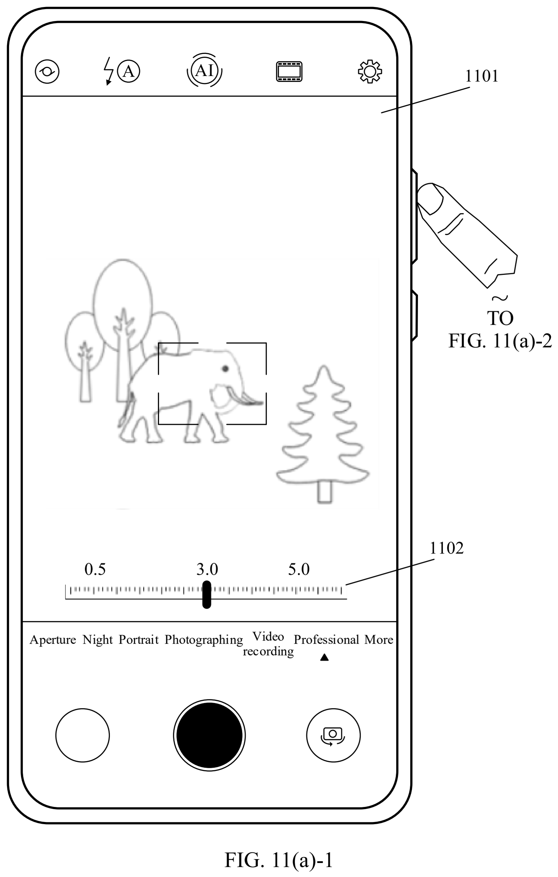

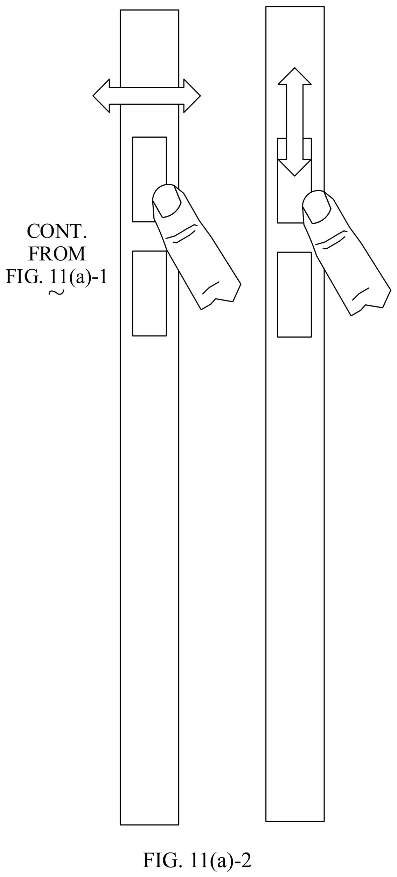

FIG. 11(a)-1 to FIG. 11(c) show another group of GUIs according to an embodiment of this application.

As shown in FIG. 11(a)-1 and FIG. 11(a)-2, an electronic device displays an interface 1101, and the interface 1101 is a parameter adjustment interface of a camera application. The electronic device may display a focal length adjustment bar 1102 in the interface 1101.

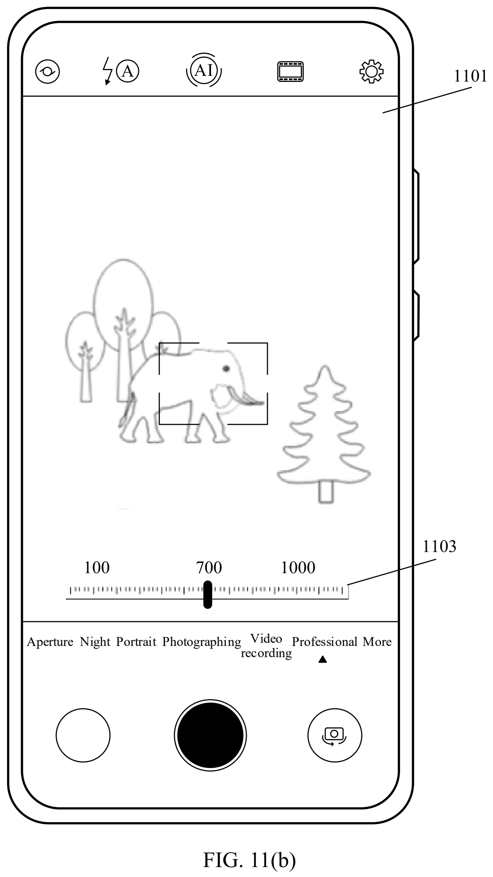

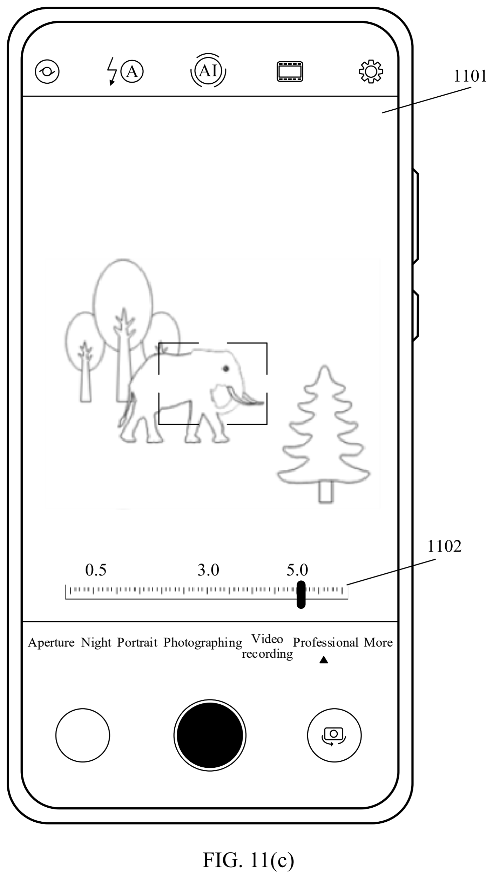

It should be noted that a manner in which the electronic device displays the parameter adjustment interface is not limited in this embodiment of this application. For example, as shown in FIG. 11(a)-1 and FIG. 11(a)-2,, the electronic device may enter a professional mode. In this mode, the electronic device may display a parameter adjustment bar, for example, the focal length adjustment bar 1102. The virtual button may detect a slide gesture of a user. Therefore, the electronic device may perform different functions based on different directions of slide gestures of the user. When detecting that the direction of the slide gesture of the user is a thickness direction of the electronic device, the electronic device may switch the focal length adjustment bar to an adjustment bar for another parameter, as shown in FIG. 11(b). When detecting that the direction of the slide gesture of the user is a length direction of the electronic device, the electronic device may adjust a focal length parameter, as shown in FIG. 11(c).

As shown in FIG. 11(b), when determining that the sliding direction of the user is the thickness direction of the electronic device, the electronic device may switch the focal length adjustment bar 1102 to an ISO adjustment bar 1103.

It should be noted that, in this embodiment of this application, the focal length adjustment bar and the ISO adjustment bar are merely used as an example, and should not be construed as a specific limitation on this embodiment of this application.

In this embodiment of this application, when running the camera application, the electronic device may adjust a photographing parameter and switch the parameter adjustment bar based on the sliding direction of the user on the virtual button, so that the user can perform an operation conveniently. In addition, gestures of switching the parameter bar and adjusting the parameter are simple, which conforms to a daily use habit and can improve user experience.

The foregoing describes the interaction method provided in embodiments of this application with reference to the GUI. The following describes the interaction method provided in embodiments of this application with reference to a flowchart.

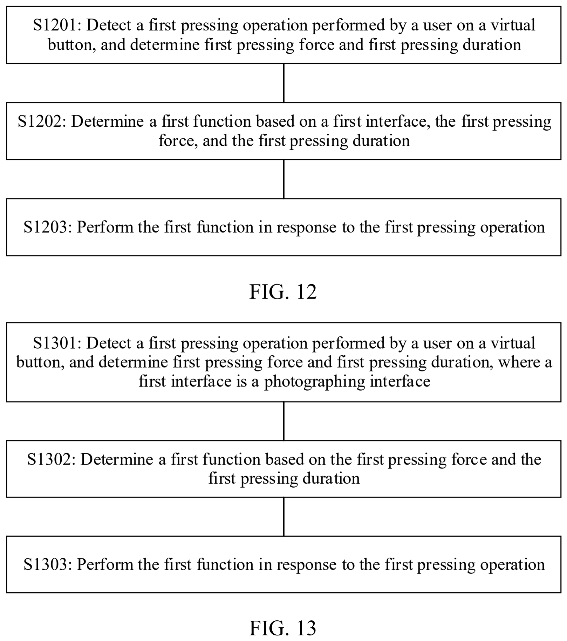

FIG. 12 is a schematic flowchart of an interaction method according to an embodiment of this application. As shown in FIG. 12, the method is applied to an electronic device. The electronic device includes a virtual button, and the virtual button is used to detect a pressing operation of a user. The electronic device displays a first interface. The method includes the following steps.

S1201: Detect a first pressing operation performed by the user on the virtual button, and determine first pressing force and first pressing duration.

S1202: Determine a first function based on the first interface, the first pressing force, and the first pressing duration.

S1203: Perform the first function in response to the first pressing operation.

Specifically, the electronic device may detect the first pressing operation performed by the user on the virtual button, determine the first pressing force and the first pressing duration, then determine the first function based on the displayed first interface, the first pressing force, and the first pressing duration, and then perform the first function in response to the first pressing operation.

For example, as shown in FIG. 5(a) to FIG. 5(d), when the electronic device displays a home screen interface, and the first pressing force is less than a first threshold and the first pressing duration is greater than or equal to a second threshold, the electronic device displays a system volume adjustment bar 502.

For another example, as shown in FIG. 6, when the electronic device displays an interface of a music application, and the first pressing force is less than a first threshold and the first pressing duration is greater than or equal to a second threshold, the electronic device displays a volume adjustment bar 602 of the music application.

For another example, as shown in FIG. 7(a) and FIG. 7(b), when the electronic device displays a home screen interface, and the first pressing force is greater than or equal to a first threshold and the first pressing duration is greater than or equal to a second threshold, the electronic device enables a voice assistant function.

For another example, as shown in FIG. 9(a) to FIG. 9(e), when the electronic device displays a photographing interface, the electronic device may perform different functions based on different first pressing force and different first pressing duration. For details, refer to the foregoing descriptions. Details are not described herein again.

In this embodiment of this application, the electronic device has the virtual button, and may perform a corresponding function based on a displayed interface, force of pressing the virtual button by the user, and duration of pressing the virtual button. This improves operation efficiency of the user, enhances interaction, and helps improve user experience.

Optionally, in some embodiments, when the first interface is the home screen interface, the first pressing force is less than the first threshold, and the first pressing duration is greater than or equal to the second threshold, the first function is a system music adjustment function.

Optionally, in some embodiments, the virtual button is further used to detect a slide gesture of the user, and the method further includes:
switching from the first function to a second function in response to a first slide gesture of the user on the virtual button, where a direction of the first slide gesture is a thickness direction of the electronic device.

For example, as shown in FIG. 5(b) and FIG. 5(c), the electronic device switches the system volume adjustment bar 502 to a brightness adjustment bar 503.

Optionally, in some embodiments, the second function is one of a brightness adjustment function, a microphone volume adjustment function, a speaker volume adjustment function, a message alert tone volume adjustment function, a screen display mode adjustment function, and an incoming call ringing volume adjustment function.

Optionally, in some embodiments, the virtual button is further used to detect the slide gesture of the user, and the method further includes:
adjusting a system volume in response to a second slide gesture of the user on the virtual button, where a direction of the second slide gesture is a length direction of the electronic device.

For example, as shown in FIG. 5(b) and FIG. 5(d), the electronic device may adjust the system volume.

Optionally, in some embodiments, when the first interface is a home screen interface, the first pressing force is greater than or equal to a first threshold, and the first pressing duration is greater than or equal to a second threshold, the first function is a voice assistant function.

For example, as shown in FIG. 7(a) and FIG. 7(b), when the electronic device displays the home screen interface, when the first pressing force is greater than or equal to the first threshold and the first pressing duration is greater than or equal to the second threshold, the electronic device enables the voice assistant function.

Optionally, in some embodiments, the first interface is a photographing interface, and when the first pressing force is greater than or equal to a first threshold and less than or equal to a third threshold, the first function is an automatic focus function.

For example, as shown in FIG. 9(a) and FIG. 9(b), the electronic device determines that the first pressing force is greater than or equal to the first threshold and less than or equal to the third threshold, and may focus on the elephant.

Optionally, in some embodiments, the electronic device does not display a focus frame during focusing, and the method further includes:
determining second pressing force and second pressing duration in response to a second pressing operation performed by the user on the virtual button; and
when the second pressing force is less than the first threshold and the second pressing duration is greater than or equal to a second threshold, displaying the focus frame, where the focus frame is used to identify a first object.

For example, FIG. 9(a) to FIG. 9(e) are used as an example. When the electronic device performs the automatic focus function, the electronic device has automatically focused on the elephant, but the elephant is not identified by the focus frame. The electronic device detects the second pressing operation of the user. When the second pressing force is less than the first threshold and the second pressing duration is greater than or equal to the second threshold, the electronic device may display the focus frame in response to the second pressing operation, so that the display focus frame identifies the elephant.

Optionally, in some embodiments, the method further includes:
switching the first object in the focus frame to a second object in response to a second slide gesture of the user on the virtual button, where a direction of the second slide gesture is a length direction of the electronic device.

As shown in FIG. 10(a) and FIG. 10(b), in response to sliding performed by the user on the virtual button, and when the sliding direction is the length direction of the electronic device, the electronic device may switch a focus object from the elephant to a tree.

Optionally, in some other embodiments, the operation of switching the focus object by the user may alternatively be sliding performed by the user on the virtual button, and a sliding direction is a thickness direction of the electronic device.

Optionally, in some embodiments, the method further includes:
locking the focus frame and the first object in response to a continuous pressing operation performed by the user on the virtual button, where pressing force of the continuous pressing operation is less than the first threshold.

Optionally, in some embodiments, the first interface is the photographing interface, and when the first pressing force is first greater than the third threshold and then less than the first threshold, the first function is a photographing function.

For example, as shown in FIG. 9(a) and FIG. 9(c), when determining that the first pressing force is first greater than the third threshold and then less than the first threshold, the electronic device performs the photographing function.

Optionally, in some embodiments, the first interface is the photographing interface, and when the first pressing force is greater than the third threshold and the first pressing duration is greater than the second threshold, the first function is a video recording function.

For example, as shown in FIG. 9(a) and FIG. 9(d), when determining that the first pressing force is greater than the third threshold and the first pressing duration is greater than the second threshold, the electronic device performs the video recording function.

Optionally, in some embodiments, the first interface is the photographing interface, and when the first pressing force is less than the first threshold and the first pressing duration is greater than the second threshold, the first function is displaying a viewfinder frame.

For example, as shown in FIG. 9(a) and FIG. 9(e), when determining that the first pressing force is less than the first threshold and the first pressing duration is greater than the second threshold, the electronic device displays the viewfinder frame.

Optionally, in some embodiments, the first interface is the photographing interface, the virtual button is further used to detect the slide gesture of the user, and the method further includes:
displaying an adjustment bar for a first parameter in response to a parameter adjustment operation of the user; and
in response to the slide gesture of the user on the virtual button, if a direction of the slide gesture is a thickness direction of the electronic device, switching the adjustment bar for the first parameter to an adjustment bar for a second parameter, or if a direction of the slide gesture is the length direction of the electronic device, adjusting the first parameter.

For example, as shown in FIG. 11(a)-1 and FIG. 11(a)-2,, and FIG. 11(b), the electronic device switches a focal length adjustment bar to an ISO adjustment bar in response to the sliding direction of the user being the thickness direction of the electronic device.

For another example, as shown in FIG. 11(a)-1 and FIG. 11(a)-2,, and FIG. 11(c), the electronic device adjusts a focal length in response to the sliding direction of the user being the length direction of the electronic device.

Optionally, in some embodiments, the first interface is an interface of a non-camera application, and the method further includes:
detecting that at least two of four edge areas of a screen are touched, further detecting a third pressing operation performed by the user on the virtual button, and determining third pressing force and third pressing duration of the third pressing operation; and
when the third pressing force is greater than or equal to the first threshold and less than or equal to the third threshold, starting the camera and performing focusing;
   when the third pressing force is first greater than the third threshold and then less than the first threshold, starting the camera and performing photographing; or
   when the third pressing force is greater than the third threshold and the third pressing duration is greater than the second threshold, starting the camera and performing video recording.

For example, as shown in FIG. 8(a) and FIG. 8(b), when determining that the third pressing force is greater than or equal to the first threshold and less than or equal to the third threshold, the electronic device may start the camera application and perform the automatic focus function.

For another example, as shown in FIG. 8(a) and FIG. 8(c), when determining that the pressing force is first greater than the third threshold and then less than the first threshold, the electronic device may start the camera application and perform the photographing function.

For another example, as shown in FIG. 8(a) and FIG. 8(d), when determining that the pressing force is greater than the third threshold and the pressing duration is greater than or equal to the second threshold, the electronic device may start the camera application and perform the video recording function.

FIG. 13 is a schematic flowchart of another interaction method according to an embodiment of this application. As shown in FIG. 13, the method is applied to an electronic device. The electronic device includes a virtual button, and the virtual button is used to detect a pressing operation of a user. The electronic device displays a first interface, and the first interface is a photographing interface. The method includes the following steps.

S1301: Detect a first pressing operation performed by the user on the virtual button, and determine first pressing force and first pressing duration.

S1302: Determine a first function based on the first pressing force and the first pressing duration.

S1303: Perform the first function in response to the first pressing operation.

Specifically, when displaying the photographing interface, the electronic device detects the first pressing operation performed by the user on the virtual button, may determine the first pressing force and the first pressing duration, determine the first function based on the first pressing force and the first pressing duration, and then perform the first function.

Optionally, in some embodiments, when the first pressing force is greater than a third threshold and the first pressing duration is greater than a second threshold, the first function is a video recording function.

For example, as shown in FIG. 9(a) and FIG. 9(d), when determining that the first pressing force is greater than the third threshold and the first pressing duration is greater than the second threshold, the electronic device performs the video recording function.

Optionally, in some embodiments, when the first pressing force is less than a first threshold and the first pressing duration is greater than the second threshold, the first function is displaying a viewfinder frame.

For example, as shown in FIG. 9(a) and FIG. 9(e), when determining that the first pressing force is less than the first threshold and the first pressing duration is greater than the second threshold, the electronic device displays the viewfinder frame.

Optionally, in some embodiments, the virtual button is further used to detect a slide gesture of the user, and the method further includes:
displaying an adjustment bar for a first parameter in response to a parameter adjustment operation of the user; and
in response to the slide gesture of the user on the virtual button, if a direction of the slide gesture is a thickness direction of the electronic device, switching the adjustment bar for the first parameter to an adjustment bar for a second parameter, or if a direction of the slide gesture is a length direction of the electronic device, adjusting the first parameter.

For example, as shown in FIG. 11(a)-1 and FIG. 11(a)-2,, and FIG. 11(b), the electronic device switches a focal length adjustment bar to an ISO adjustment bar in response to the sliding direction of the user being the thickness direction of the electronic device.

For another example, as shown in FIG. 11(a)-1 and FIG. 11(a)-2,, and FIG. 11(c), the electronic device adjusts a focal length in response to the sliding direction of the user being the length direction of the electronic device.

Optionally, in some embodiments, when the electronic device performs an automatic focus function, the method further includes:
detecting a second pressing operation performed by the user on the virtual button, and determining second pressing force and second pressing duration; and
when the second pressing force is less than the first threshold and the second pressing duration is greater than or equal to the second threshold, displaying a focus frame in response to the second pressing operation, where the focus frame is used to identify a first object. In other words, the electronic device may not display the focus frame when performing the automatic focus function, and may display the focus frame when the second pressing operation is detected, the second pressing force is less than the first threshold, and the second pressing duration is greater than or equal to the second threshold. Alternatively, the electronic device may display the focus frame when performing the automatic focus function, and the focus frame disappears or fades after a period of time. The electronic device may display the focus frame when the second pressing operation is detected, the second pressing force is less than the first threshold, and the second pressing duration is greater than or equal to the second threshold.

Optionally, in some embodiments, when the electronic device performs the automatic focus function, the method further includes:
switching the first object in the focus frame to a second object in response to a second slide gesture of the user on the virtual button, where a direction of the second slide gesture is the length direction of the electronic device.

Optionally, in some embodiments, when the electronic device performs the automatic focus function, the method further includes:
locking the focus frame and the first object in response to a continuous pressing operation performed by the user on the virtual button, where pressing force of the continuous pressing operation is less than the first threshold.

In this embodiment of this application, the electronic device has the virtual button, and when running a camera application, the electronic device may perform a corresponding function based on the force of pressing the virtual button by the user and the duration of pressing the virtual button. This improves operation efficiency of the user, enhances interaction, and helps improve user experience.

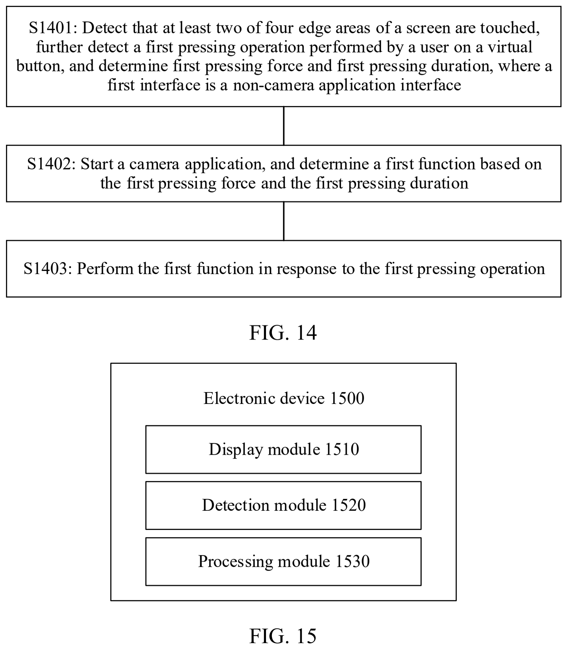

FIG. 14 is a schematic flowchart of another interaction method according to an embodiment of this application. As shown in FIG. 14, the method is applied to an electronic device. The electronic device includes a virtual button, and the virtual button is used to detect a pressing operation of a user. The electronic device displays a first interface, and the first interface is an interface of a non-camera application. The method includes the following steps.

S1401: Detect that at least two of four edge areas of a screen are touched, further detect a first pressing operation performed by the user on the virtual button, and determine first pressing force and first pressing duration.

S1402: Start a camera application, and determine a first function based on the first pressing force and the first pressing duration.

S1403: Perform the first function in response to the first pressing operation.

Optionally, in some embodiments, when the first pressing force is greater than or equal to a first threshold and less than or equal to a third threshold, the first function is an automatic focus function.

Optionally, in some embodiments, when the first pressing force is first greater than the third threshold and then less than the first threshold, the first function is a photographing function.

Optionally, in some embodiments, when the first pressing force is greater than a third threshold and the first pressing duration is greater than a second threshold, the first function is a video recording function.

In this embodiment of this application, the electronic device has the virtual button. When displaying the interface of the non-camera application, the electronic device may quickly perform a function in the camera application based on the force of pressing the virtual button by the user and the duration of pressing the virtual button. This improves operation efficiency of the user, enhances interaction, and helps improve user experience.

The foregoing mainly describes the interaction method provided in embodiments of this application from a perspective of the electronic device. It may be understood that, to implement the foregoing functions, the electronic device includes a corresponding hardware structure and/or software module for performing each of the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, a processor of the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

When each functional module is obtained through division based on each corresponding function, FIG. 15 is a diagram of composition of an electronic device 1500 according to an embodiment of this application. As shown in FIG. 15, the electronic device 1500 includes a display module 1510, a detection module 1520, and a processing module 1530.

### In some embodiments:

The display module 1510 is configured to display a first interface.

The detection module 1520 is configured to detect a first pressing operation performed by a user on a virtual button and determine first pressing force and first pressing duration.

The processing module 1530 is configured to determine a first function based on the first interface, the first pressing force, and the first pressing duration.

The processing module 1530 is further configured to perform the first function.

### In some embodiments:

The display module 1510 is configured to display a first interface, where the first interface is a photographing interface.

The detection module 1520 is configured to detect a first pressing operation performed by a user on a virtual button and determine first pressing force and first pressing duration.

The processing module 1530 is configured to determine a first function based on the first pressing force and the first pressing duration.

The processing module 1530 is further configured to perform the first function.

### In some embodiments:

The display module 1510 is configured to display a first interface, where the first interface is an interface of a non-camera application.

The detection module 1520 is configured to detect that at least two of four edge areas of a screen are touched, further detect a first pressing operation performed by the user on the virtual button, and determine first pressing force and first pressing duration.

The processing module 1530 is configured to start a camera application, and determine a first function based on the first pressing force and the first pressing duration.

The processing module 1530 is further configured to perform the first function.

An embodiment of this application provides a computer program product. When the computer program product runs on an electronic device, the electronic device is enabled to perform the technical solutions in the foregoing embodiments. An implementation principle and technical effect of the computer program product are similar to those of the foregoing method related embodiments. Details are not described herein again.

An embodiment of this application provides a readable storage medium. The readable storage medium includes instructions. When the instructions are run on an electronic device, the electronic device is enabled to perform the technical solutions of the foregoing embodiments. An implementation principle and technical effect of the readable storage medium are similar. Details are not described herein again.

An embodiment of this application provides a chip. The chip is configured to execute instructions. When the chip runs, the technical solutions in the foregoing embodiments are performed. An implementation principle and technical effect of the chip are similar. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. An interaction method, wherein the method is applied to an electronic device, the electronic device comprises a virtual button, the virtual button is used to detect a pressing operation of a user, the electronic device displays a first interface, and the method comprises:
detecting a first pressing operation performed by the user on the virtual button, and determining first pressing force and first pressing duration;
determining a first function based on the first interface, the first pressing force, and the first pressing duration; and
performing the first function in response to the first pressing operation.

2. The method according to claim 1, wherein the first interface is a home screen interface, and when the first pressing force is less than a first threshold, and the first pressing duration is greater than or equal to a second threshold, the first function is a system volume adjustment function.

3. The method according to claim 2, wherein the virtual button is further used to detect a slide gesture of the user, and the method further comprises:
switching from the first function to a second function in response to a first slide gesture of the user on the virtual button, wherein a direction of the first slide gesture is a thickness direction of the electronic device, and the second function is one of a brightness adjustment function, a microphone volume adjustment function, a speaker volume adjustment function, a message alert tone volume adjustment function, a screen display mode adjustment function, and an incoming call ringing volume adjustment function.

4. The method according to claim 2, wherein the virtual button is further used to detect a slide gesture of the user, and the method further comprises:
adjusting a system volume in response to a second slide gesture of the user on the virtual button, wherein a direction of the second slide gesture is a length direction of the electronic device.

5. The method according to claim 1, wherein the first interface is a home screen interface, and when the first pressing force is greater than or equal to a first threshold, and the first pressing duration is greater than or equal to a second threshold, the first function is a voice assistant function.

6. The method according to claim 1, wherein the first interface is a photographing interface, and when the first pressing force is greater than or equal to a first threshold and less than or equal to a third threshold, the first function is an automatic focus function.

7. The method according to claim 6, wherein the method further comprises:
detecting a second pressing operation performed by the user on the virtual button, and determining second pressing force and second pressing duration; and
when the second pressing force is less than the first threshold and the second pressing duration is greater than or equal to a second threshold, displaying a focus frame in response to the second pressing operation, wherein the focus frame is used to identify a first object.

8. The method according to claim 7, wherein the virtual button is further used to detect a slide gesture of the user, and the method further comprises:
switching the first object in the focus frame to a second object in response to a second slide gesture of the user on the virtual button, wherein a direction of the second slide gesture is a length direction of the electronic device.

9. The method according to claim 7, wherein the method further comprises:
locking the focus frame and the first object in response to a continuous pressing operation performed by the user on the virtual button, wherein pressing force of the continuous pressing operation is less than the first threshold.

10. The method according to any one of claims 6 to 9, wherein when the first pressing force is first greater than the third threshold and then less than the first threshold, the first function is a photographing function.

11. The method according to any one of claims 6 to 10, wherein when the first pressing force is greater than the third threshold and the first pressing duration is greater than the second threshold, the first function is a video recording function.

12. The method according to any one of claims 6 to 11, wherein when the first pressing force is less than the first threshold and the first pressing duration is greater than the second threshold, the first function is displaying a viewfinder frame.

13. The method according to any one of claims 6 to 12, wherein the virtual button is further used to detect the slide gesture of the user, and the method further comprises:
displaying an adjustment bar for a first parameter in response to a parameter adjustment operation of the user; and
in response to the slide gesture of the user on the virtual button, if a direction of the slide gesture is a thickness direction of the electronic device, switching the adjustment bar for the first parameter to an adjustment bar for a second parameter, or if a direction of the slide gesture is the length direction of the electronic device, adjusting the first parameter.

14. The method according to any one of claims 2 to 5, wherein the method further comprises:
detecting that at least two of four edge areas of a screen are touched, further detecting a third pressing operation performed by the user on the virtual button, and determining third pressing force and third pressing duration of the third pressing operation; and
when the third pressing force is greater than or equal to the first threshold and less than or equal to the third threshold, starting a camera and performing automatic focus;
when the third pressing force is first greater than the third threshold and then less than the first threshold, starting a camera and performing photographing; or
when the third pressing force is greater than the third threshold and the third pressing duration is greater than the second threshold, starting a camera and performing video recording.

15. An interaction method, wherein the method is applied to an electronic device, the electronic device comprises a virtual button, the virtual button is used to detect a pressing operation of a user, the electronic device displays a first interface, the first interface is a photographing interface, and the method comprises:
detecting a first pressing operation performed by the user on the virtual button, and determining first pressing force and first pressing duration;
determining a first function based on the first pressing force and the first pressing duration; and
performing the first function in response to the first pressing operation.

16. The method according to claim 15, wherein when the first pressing force is greater than or equal to a first threshold and less than or equal to a third threshold, the first function is an automatic focus function.

17. The method according to claim 16, wherein the method further comprises:
detecting a second pressing operation performed by the user on the virtual button, and determining second pressing force and second pressing duration; and
when the second pressing force is less than the first threshold and the second pressing duration is greater than or equal to a second threshold, displaying a focus frame in response to the second pressing operation, wherein the focus frame is used to identify a first object.

18. The method according to claim 17, wherein the virtual button is further used to detect a slide gesture of the user, and the method further comprises:
switching the first object in the focus frame to a second object in response to a second slide gesture of the user on the virtual button, wherein a direction of the second slide gesture is a length direction of the electronic device.

19. The method according to claim 17, wherein the method further comprises:
locking the focus frame and the first object in response to a continuous pressing operation performed by the user on the virtual button, wherein pressing force of the continuous pressing operation is less than the first threshold.

20. The method according to any one of claims 15 to 19, wherein when the first pressing force is first greater than the third threshold and then less than the first threshold, the first function is a photographing function.

21. The method according to any one of claims 15 to 20, wherein when the first pressing force is greater than the third threshold and the first pressing duration is greater than the second threshold, the first function is a video recording function.

22. The method according to any one of claims 15 to 21, wherein when the first pressing force is less than the first threshold and the first pressing duration is greater than the second threshold, the first function is displaying a viewfinder frame.

23. The method according to any one of claims 15 to 22, wherein the virtual button is further used to detect the slide gesture of the user, and the method further comprises:
displaying an adjustment bar for a first parameter in response to a parameter adjustment operation of the user; and
in response to the slide gesture of the user on the virtual button, if a direction of the slide gesture is a thickness direction of the electronic device, switching the adjustment bar for the first parameter to an adjustment bar for a second parameter, or if a direction of the slide gesture is the length direction of the electronic device, adjusting the first parameter.

24. An interaction method, wherein the method is applied to an electronic device, the electronic device comprises a virtual button, the virtual button is used to detect a pressing operation of a user, the electronic device displays a first interface, the first interface is an interface of a non-camera application, and the method comprises:
detecting that at least two of four edge areas of a screen are touched, further detecting a first pressing operation performed by the user on the virtual button, and determining first pressing force and first pressing duration;
starting a camera application, and determining a first function based on the first pressing force and the first pressing duration; and
performing the first function in response to the first pressing operation.

25. The method according to claim 24, wherein when the first pressing force is greater than or equal to a first threshold and less than or equal to a third threshold, the first function is an automatic focus function.

26. The method according to claim 24 or 25, wherein when the first pressing force is first greater than the third threshold and then less than the first threshold, the first function is a photographing function.

27. The method according to claim 24, wherein when the first pressing force is greater than the third threshold and the first pressing duration is greater than a second threshold, the first function is a video recording function.

28. An electronic device, comprising one or more processors and one or more memories, wherein the one or more memories store one or more computer programs, the one or more computer programs comprise instructions, and when the instructions are executed by the one or more processors, the method according to any one of claims 1 to 14, claims 15 to 23, or claims 24 to 27 is performed.

29. A chip, wherein the chip comprises a processor and a communication interface, the communication interface is configured to receive a signal and transmit the signal to the processor, and the processor processes the signal, so that the method according to any one of claims 1 to 14, claims 15 to 23, or claims 24 to 27 is performed.

30. A computer-readable storage medium, wherein the computer-readable storage medium stores computer instructions, and when the computer instructions are run on a computer, the method according to any one of claims 1 to 14, claims 15 to 23, or claims 24 to 27 is performed.
